(19) Europäisches Patentamt / European Patent Office / Office européen des brevets

(11) EP 2 473 538 B1

(12) EUROPEAN PATENT SPECIFICATION

(45) Date of publication and mention of the grant of the patent: **26.07.2017 Bulletin 2017/30**

(21) Application number: **10748037.8**

(22) Date of filing: **24.08.2010**

(51) Int Cl.: ***C08F 210/16*** *(2006.01)* ***C08F 4/642*** *(2006.01)*

(86) International application number: **PCT/US2010/046495**

(87) International publication number: **WO 2011/025784 (03.03.2011 Gazette 2011/09)**

# (54) CATALYST AND PROCESS FOR POLYMERIZING AN OLEFIN AND POLYOLEFIN PREPARED THEREBY

KATALYSATOR UND VERFAHREN ZUR OLEFINPOLYMERISATION SOWIE DAMIT HERGESTELLTES POLYOLEFIN

CATALYSEUR ET PROCÉDÉ DE POLYMÉRISATION D’UNE OLÉFINE ET POLYOLÉFINE PRÉPARÉE GRÂCE À CE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.08.2009 US 238298 P**

(43) Date of publication of application:
**11.07.2012 Bulletin 2012/28**

(73) Proprietor: **Dow Global Technologies LLC**
**Midland, MI 48674 (US)**

(72) Inventors:
- **KLOSIN, Jerzy**
  **Midland**
  **MI 48642 (US)**
- **PETERSON, Thomas, H.**
  **Midland**
  **MI 48640 (US)**

(74) Representative: **Beck Greener**
**Fulwood House**
**12 Fulwood Place**
**London WC1V 6HR (GB)**

(56) References cited:
**WO-A1-2006/020624 US-A1- 2004 010 103**

- **MARQUET N ET AL: "Group 4 Metal Complexes of Fluorous (Di)Alkoxide-(Di)Imino Ligands: Synthesis, Structure, Olefin Polymerization Catalysis, and Decomposition Pathways", ORGANOMETALLICS,, vol. 28, 1 January 2009 (2009-01-01), pages 606-620, XP009141513,**
- **CHIEN J C W ET AL: "OLEFIN COPOLYMERIZATION AND OLEFIN/DIENE TERPOLYMERIZATION WITH A ZIRCONOCENIUM CATALYST SYSTEM", MAKROMOLEKULARE CHEMIE, RAPID COMMUNICATIONS, HUTHIG UND WEPF VERLAG. BASEL, CH, vol. 14, 1 January 1993 (1993-01-01), pages 109-114, XP001015231, DOI: DOI:10.1002/MARC.1993.030140209**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 473 538 B1

**Description**

BACKGROUND OF THE INVENTION

Field of the Invention.

The present invention generally relates to a catalyst and process for polymerizing an olefin and to a polyolefin prepared by the process.

Description of the related art.

Polyethylene polymer (also known as polyethene or poly(methylene)), polypropylene, and poly(ethylene alpha-olefin) copolymers are examples of polyolefins (also known as polyalkenes) widely used in industry. They are desirable for making, for example, containers, tubing, films and sheets for packaging, and synthetic lubricants.

A particularly valuable type of poly(ethylene alpha-olefin) copolymer is an olefin block copolymer (OBC). OBCs are characterized as having at least one so-called "hard segment" or block comprising residuals of ethylene monomer and at least one so-called "soft segment" or block comprising residuals of ethylene and an alpha-olefin (also known as an alpha-olefin and 1-olefin) monomer. Examples of OBCs are INFUSE™ Olefin Block Copolymers from The Dow Chemical Company, Midland, Michigan, USA. The INFUSE™ Olefin Block Copolymers are useful in a variety of forms and applications such as, for example, those listed at www.dow.com/infuse.

Arjan van der Linden, et al., Polymerization of $\alpha$-Olefins and Butadiene and Catalytic Cyclotrimerization of 1-Alkynes by a New Class of Group IV Catalysts. Control of Molecular Weight and Polymer Microstructure via Ligand Tuning in Sterically Hindered Chelating Phenoxide Titanium and Zirconium Species, Journal of the American Chemical Society, 1995; 117(11):3008-3021 mention, among other things, titanium or zirconium sterically hindered chelating alkoxide complexes.

U.S. Patent Numbers US 5,536,797 (Syndiotactic Prochiral Olefin Polymerization Process) and US 5,670,680 (Method For Producing Octahydrofluorenyl Metal Complexes) independently mention, among other things, octahydrofluorenyl metal complexes.

U.S. Patent Application Publication Number US 2007/0111883 A1 mentions, among other things, catalysts for olefin polymerization.

PCT International Patent Application Publication Number WO 2007/136494 A2 mentions, among other things, the metal-ligand complex of formula (1):

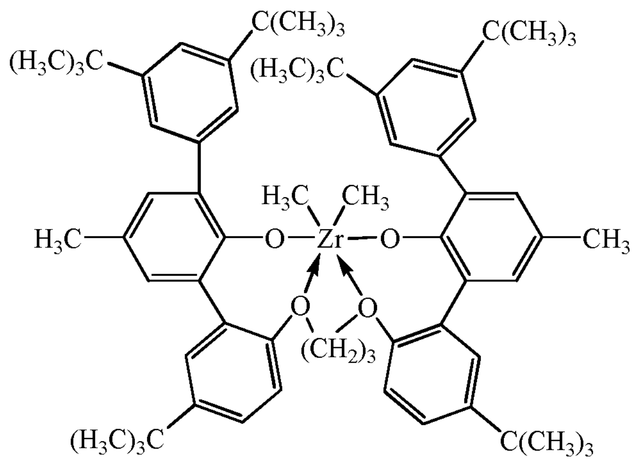

(1)

.

United States (U.S.) Patent Application Publication Number US 2004/0010103 teaches methods of preparing the metal-ligand complex of formula (1).

Group 4 Metal Complexes of Fluorous (Di)Alkoxide-Di(Amino) Ligands: Synthesis, Structure, Olefin Polymerization Catalysis, and Decomposition Pathways by Marquet et al, ORGANOMETALLICS, vol 28 1 January 2009 pp 606-620 discloses catalyst precursors in the form of dichlorides, benzyls or alkoxides. Olefin Copolymerization and Olefin/Diene Terpolymerization with a Zirconocenium Catalyst System, Makromolekulare Chemie, Rapid Communications, Huthig und Wepf Verlag, Basel, Ch, vol 14, 1 January 1993 pp109-114 discloses bridged cyclopentadienyl ligand systems.

Chemical industry desires new processes and catalysts for polymerizing olefins and new polyolefins prepared thereby.

BRIEF SUMMARY OF THE INVENTION

In a first embodiment, the present invention is a catalyst prepared with one or more metal-ligand complexes (also referred to herein as precatalysts), an alkylaluminum and a boron-containing ionic compound, preparation of the catalyst comprising steps of contacting the one or more metal-ligand complexes to the alkylaluminum to produce an intermediate derivative therefrom; and then contacting the intermediate derivative to the boron-containing ionic compound to produce the catalyst; each contacting step being performed under independent catalyst preparing conditions (described later); the boron-containing ionic compound comprising a cation and a boron-containing anion and being essentially non-coordinating; the ratio of total number of moles of the alkylaluminum to total number of moles of the one or more metal-ligand complexes being from 1:1 to 100:1; and the ratio of total number of moles of the boron-containing ionic compound to the total number of moles of the one or more metal-ligand complexes being from 1:1 to 5:1; and the metal-ligand complex being a metal-ligand complex of formula (I):

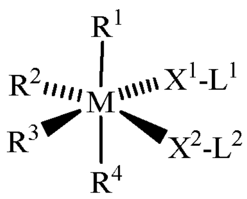

(I)

wherein:

- M is titanium, zirconium, or hafnium;
- $X^1$ is O, N(H), or $N(L^3)$;
- $X^2$ is O, N(H), or $N(L^4)$;
- Each of $L^1$ and $L^2$ independently is $(C_1\text{-}C_{40})$hydrocarbyl;
- Each of $L^3$ and $L^4$ independently is $(C_1\text{-}C_{40})$hydrocarbyl; or $L^3$ is taken together with $L^1$ to form a $(C_2\text{-}C_{40})$alkylene, $L^4$ is taken together with $L^2$ to form a $(C_2\text{-}C_{40})$alkylene, $L^3$ is taken together with $L^4$ to form a $(C_2\text{-}C_{40})$alkylene, or any combination thereof;
- Each of $-X^1\text{-}L^1$ and $-X^2\text{-} L^2$ being an anion having a formal oxidation state of -1;
- Two of $R^1$, $R^2$, $R^3$, and $R^4$ independently are neutral ligands and the other two of $R^1$, $R^2$, $R^3$, and $R^4$ independently are anionic ligands, each neutral ligand independently being $R^MNR^KR^L$, $R^KOR^L$, $R^KSR^L$, or $R^MPR^KR^L$, wherein each $R^K$, $R^L$, and $R^M$ independently is hydrogen, $(C_1\text{-}C_{40})$hydrocarbyl, or $(C_1\text{-}C_{40})$heterohydrocarbyl, or any $R^K$ and $R^L$, or any two $R^K$, the $R^K$ and $R^L$ or two $R^K$ being of a same or different ligand, independently are taken together to form a $(C_2\text{-}C_{40})$hydrocarbylene or $(C_1\text{-}C_{40})$heterohydrocarbylene, and any remaining $R^K$ and $R^L$ are as defined above; and each anionic ligand independently having a formal oxidation state of -1 and independently being $R^K\text{-}P\text{=}N^-$, $(R^K)_2C\text{=}N^-$, $R^KR^LN^-$, $R^KO^-$, $R^KS^-$, $R^KR^LP^-$, or $R^MR^KR^LSi^-$, wherein each $R^K$, $R^L$, and $R^M$ independently is as defined above; where $R^1$, $R^2$, $R^3$, and $R^4$ are selected depending on the formal oxidation state of M such that the metal-ligand complex of formula (I) is, in aggregate, neutral;
- Each of the aforementioned $(C_2\text{-}C_{40})$alkylene, $(C_1\text{-}C_{40})$hydrocarbyl, $(C_1\text{-}C_{40})$heterohydrocarbyl, $(C_2\text{-}C_{40})$hydrocarbylene, and $(C_1\text{-}C_{40})$heterohydrocarbylene independently are the same or different and independently is unsubstituted or substituted with one or more substituents $R^S$; and
- Each $R^S$ independently is halo, polyfluoro, perfluoro, unsubstituted $(C_1\text{-}C_{18})$hydrocarbyl, $F_3C$-, $FCH_2O$-, $F_2HCO$-, $F_3CO$-, oxo (i.e., =O), $R_3Si$-, RO-, RS-, RS(O)-, $RS(O)_2$-, $R_2P$-, $R_2N$-, $R_2C\text{=}N$-, NC-, RC(O)O-, ROC(O)-, RC(O)N(R)-, or $R_2NC(O)$-, wherein each R independently is an unsubstituted $(C_1\text{-}C_{18})$hydrocarbyl.

In a second embodiment, the present invention is a process for preparing the catalyst of the first embodiment, the process comprising steps of contacting the one or more metal-ligand complexes of formula (I) to the alkylaluminum to produce the intermediate derivative therefrom; and then contacting the intermediate derivative to the boron-containing ionic compound to produce the catalyst of the first embodiment; each contacting step independently being performed under catalyst preparing conditions; the ratio of total number of moles of the alkylaluminum to total number of moles of the one or more metal-ligand complexes being from 1:1 to 100:1; and the ratio of total number of moles of the boron-containing ionic compound to the total number of moles of the one or more metal-ligand complexes being from 1:1 to 5:1.

In a third embodiment, the present invention is a process for polymerizing an olefin, the process comprising a step of contacting together ingredients comprising a catalyst system and an olefin monomer under olefin polymerizing conditions (described later) to give a polyolefin, the catalyst system comprising a catalytic amount of the catalyst of the first embodiment and the polyolefin comprising a plurality of repeat units, each repeat unit independently being a residual

of the olefin monomer, or a derivative of the residual of the olefin monomer.

The catalysts of the first embodiment may be prepared by the process of the second embodiment and are useful in the process of the third embodiment. The process of the third embodiment employing the invention catalysts gives the polyolefin. In preferred embodiments, the catalyst system further comprises a chain shuttling agent (CSA, described later) and an ethylene-polymerization catalyst (described later), the ethylene-polymerization catalyst preferably being useful for selectively polymerizing ethylene in the presence of the alpha-olefin, the preferred process giving the polyolefin comprising a poly(ethylene alpha-olefin) block copolymer (i.e., an OBC). The poly(ethylene alpha-olefin) block copolymer preferably comprises an ethylene-derived hard segment and a soft segment comprising residuals from the alpha-olefin and ethylene. The term "poly(ethylene alpha-olefin) block copolymer" is used interchangeably herein with the terms "olefin block copolymer," "OBC," "ethylene/$\alpha$-olefin block interpolymer," and "ethylene/$\alpha$-olefin block copolymer". The terms "alpha-olefin" and "$\alpha$-olefin" are used interchangeably herein.

The polyolefins prepared by the process of the third embodiment are useful in numerous applications such as, for example, synthetic lubricants and, especially for the OBCs, elastic films for hygiene applications (e.g., for diaper covers); flexible molded goods for appliances, tools, consumer goods (e.g., toothbrush handles), sporting goods, building and construction, automotive, and medical applications; flexible gaskets and profiles for appliance (e.g., refrigerator door gaskets and profiles), building and construction, and automotive applications; adhesives for packaging (e.g., for use in manufacturing corrugated cardboard boxes), hygiene applications, tapes, and labels; and foams for sporting goods (e.g., foam mats), packaging, consumer goods, and automotive applications.

Additional embodiments are described in the remainder of the specification, including the claims.

DETAILED DESCRIPTION OF THE INVENTION

The present invention generally relates to a catalyst and process for polymerizing an olefin and to a polyolefin prepared by the process as summarized previously. For purposes of United States patent practice and other patent practices allowing incorporation of subject matter by reference, the entire contents - unless otherwise indicated - of each U.S. patent, U.S. patent application, U.S. patent application publication, PCT international patent application and WO publication equivalent thereof, referenced in the instant Summary or Detailed Description of the Invention are hereby incorporated by reference. In an event where there is a conflict between what is written in the present specification and what is written in a patent, patent application, or patent application publication, or a portion thereof that is incorporated by reference, what is written in the present specification controls.

In the present application, any lower limit of a range of numbers, or any preferred lower limit of the range, may be combined with any upper limit of the range, or any preferred upper limit of the range, to define a preferred aspect or embodiment of the range. Each range of numbers includes all numbers, both rational and irrational numbers, subsumed within that range (e.g., the range from about 1 to about 5 includes, for example, 1, 1.5, 2, 2.75, 3, 3.80, 4, and 5).

Certain unsubstituted chemical groups are described herein as having a maximum number of 40 carbon atoms (e.g., ($C_1$-$C_{40}$)hydrocarbyl and ($C_1$-$C_{40}$)heterohydrocarbyl). These include substituent groups (e.g., R groups) and olefin monomers where number of carbon atoms is not critical. Forty carbon atoms in such unsubstituted chemical groups is a practical upper limit; nevertheless in some embodiments the invention contemplates such unsubstituted chemical groups having a maximum number of carbon atoms that is higher than 40 (e.g., 100, 1000, or more).

In an event where there is a conflict between a compound name and its structure, the structure controls.

In an event where there is a conflict between a unit value that is recited without parentheses, e.g., 2 inches, and a corresponding unit value that is parenthetically recited, e.g., (5 centimeters), the unit value recited without parentheses controls.

As used herein, "a," "an," "the," "at least one," and "one or more" are used interchangeably. In any aspect or embodiment of the instant invention described herein, the term "about" in a phrase referring to a numerical value may be deleted from the phrase to give another aspect or embodiment of the instant invention. In the former aspects or embodiments employing the term "about," meaning of "about" can be construed from context of its use. Preferably "about" means from 90 percent to 100 percent of the numerical value, from 100 percent to 110 percent of the numerical value, or from 90 percent to 110 percent of the numerical value. In any aspect or embodiment of the instant invention described herein, the open-ended terms "comprising," "comprises," and the like (which are synonymous with "including," "having," and "characterized by") may be replaced by the respective partially closed phrases "consisting essentially of," consists essentially of," and the like or the respective closed phrases "consisting of," "consists of," and the like to give another aspect or embodiment of the instant invention. In the present application, when referring to a preceding list of elements (e.g., ingredients), the phrases "mixture thereof," "combination thereof," and the like mean any two or more, including all, of the listed elements. The term "or" used in a listing of members, unless stated otherwise, refers to the listed members individually as well as in any combination, and supports additional embodiments reciting any one of the individual members (e.g., in an embodiment reciting the phrase "10 percent or more," the "or" supports another embodiment reciting "10 percent" and still another embodiment reciting "more than 10 percent."). The term "plurality" means two or

more, wherein each plurality is independently selected unless indicated otherwise.

The alkylaluminum and boron-containing ionic compound comprise activating cocatalysts. Preferably, the ratio of total number of moles of the alkylaluminum to total number of moles of the one or more metal-ligand complexes is from 25:1 to 75:1, and more preferably from 40:1 to 60:1 (e.g., 50:1). Preferably, the ratio of total number of moles of the boron-containing ionic compound to the total number of moles of the one or more metal-ligand complexes is from 1:1 to 2:1, and more preferably from 1.0:1.4 (e.g., 1.2).

The process of the third embodiment employs a catalytic amount of the catalyst of the first embodiment. The term "catalytic amount" means mole percent (mol%) of the catalyst relative to an olefin monomer or the number of moles of the catalyst relative to number of moles of the olefin monomer sufficient to catalyze a polymerization reaction of the olefin monomer. Preferably, the catalytic amount is 0.01 mole percent or lower, more preferably 0.001 mole percent or lower, still more preferably 0.0001 mole percent or lower, and even more preferably 0.00001 mole percent or lower. Also preferably, the catalytic amount is a mole ratio of olefin monomer to catalyst of at least 10,000:1, more preferably at least 100,000:1, still more preferably at least 1,000,000:1, and even more preferably at least 10,000,000:1.

Preferably, the process of the third embodiment employs, and the catalyst system comprises the catalyst of the first embodiment that is an invention catalyst prepared with the alkylaluminum, boron-containing ionic compound, and three or fewer, more preferably two, and still more preferably one metal-ligand complex of formula (I).

The metal-ligand complexes of formula (I) are rendered catalytically active by contacting them to, or combining them with, the alkylaluminum and boron-containing ionic compound according to the process of the second embodiment. The term "alkylaluminum" means a monoalkylaluminum dihydride or monoalkylaluminum dihalide, a dialkylaluminum hydride or dialkylaluminum halide, or a trialkylaluminum. Preferably, the alkylaluminum comprises an alkylaluminum compound of formula (II): $Al(R^A)(R^B)(R^C)$ (II), wherein $R^A$ is $(C_1-C_{40})$alkyl, and each of $R^B$ and $R^C$ independently is $(C_1-C_{40})$alkyl, hydride, or halide.

The boron-containing ionic compound comprises a cation and a boron-containing anion. As would be generally known in the art, the boron-containing anion is non-coordinating to M of formula (I). This generally means that the boron-containing anion does not compete in the invention process with olefin or polymeryl chain for coordinating to M of formula (I). The non-coordinating boron-containing anion preferably is one that, with the cation and an invention precatalyst, prepares an invention catalyst that exhibits at least 2%, more preferably at least 5%, still more preferably at least 10%, even more preferably at least 20%, and yet more preferably at least 50% of the catalytic activity of an invention catalyst that has been prepared from bis(octadecyl)methylammonium tetrakis(pentafluorophenyl)borate and the same invention precatalyst. The same polymerization procedure used for the comparision is General Procedure 1 (described later). Preferably, the boron-containing anion is a tetra-substituted boron anion (i.e., a borate) or is derived *in situ* during the invention process from a tri-substituted boron (i.e., aborane) and an anionic ligand one of $R^1$, $R^2$, $R^3$, and $R^4$ of formula (I). The substituents of the tetra-substituted boron and trisubstituted boron preferably are halo or $(C_1-C_{20})$hydrocarbyl. A more preferred tri-substituted boron is $B((C_1-C_{20})hydrocarbyl)_3$ (e.g., tris(pentafluorophenyl borane). A more preferred tetra-substituted boron anion is $[B((C_1-C_{20})hydrocarbyl)_4]^-$ (e.g., trityl tetrakis(pentafluorophenyl)borate). A still more preferred boron-containing ionic compound is a tri($(C_1-C_{20})$hydrocarbyl)ammonium tetra($(C_1-C_{20})$hydrocarbyl)borate (e.g., bis(octadecyl)methylammonium tetrakis(pentafluorophenyl)borate ($[HNMe(C_{18}H_{37})_2][B(C_6F_5)_4]$, abbreviated as BOMATPB)). Preferably, the cation comprises an ammonium-type cation or hydrocarbon cation (e.g., triphenylmethyl cation). As used herein, the term "ammonium-type cation" means a nitrogen bearing a formal charge of +1. The ammonium-type cation preferably is an ammonium-type organic cation, which preferably is a $((C_1-C_{20})hydrocarbyl)_3N(H)^+$, a $((C_1-C_{20})hydrocarbyl)_2N(H)_2^+$, or $(C_1-C_{20})hydrocarbylN(H)_3^+$. The ammonium-type cation $((C_1-C_{20})hydrocarbyl)_3N(H)^+$ is more preferred. As used here, each $(C_1-C_{20})$hydrocarbyl independently may be the same or different.

Polyolefins include, for example, homopolymers and interpolymers. Polyolefin homopolymers comprise residuals of one polymerizable olefin (i.e., olefin monomer) and derivatives of the polyolefin homopolymers (e.g., terminal hydroxyl containing polyolefin homopolymers). Polyolefin interpolymers comprise residuals of two or more polymerizable olefins. In some embodiments, polymerizable olefins useful in the invention processes are $(C_2-C_{40})$hydrocarbons consisting of carbon and hydrogen atoms and containing at least 1 and preferably no more than 3, and more preferably no more than 2 carbon-carbon double bonds. In some embodiments, from 1 to 4 hydrogen atoms of the $(C_2-C_{40})$hydrocarbon are replaced, each by a halogen atom, preferably fluoro or chloro to give halo-substituted $(C_2-C_{40})$hydrocarbons. The $(C_2-C_{40})$hydrocarbons (not halo-substituted) are preferred. Preferred polymerizable olefins (i.e., olefin monomers) useful for making the polyolefins are ethylene and polymerizable $(C_3-C_{40})$olefins. The $(C_3-C_{40})$olefins include an alpha-olefin, a cyclic olefin, styrene, and a cyclic or acyclic diene. Preferably, the alpha-olefin comprises the $(C_3-C_{40})$alpha-olefin, more preferably a branched chain $(C_3-C_{40})$alpha-olefin, still more preferably a linear-chain $(C_3-C_{40})$alpha-olefin, even more preferably a linear chain $(C_3-C_{40})$alpha-olefin of formula (A): $CH_2=CH_2-(CH_2)_zCH_3$ (A), wherein z is an integer of from 0 to 40, and yet even more preferably a linear-chain $(C_3-C_{40})$alpha-olefin that is 1-propene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, or a linear-chain $(C_{20}-C_{24})$alpha-olefin. Preferably the cyclic olefin is a $(C_3-C_{40})$cyclic olefin. Preferably, the cyclic or acyclic diene is a $(C_4-C_{40})$diene, preferably an acyclic diene,

more preferably an acyclic conjugated ($C_4$-$C_{40}$)diene, more preferably an acyclic 1,3-conjugated ($C_4$-$C_{40}$)diene, and still more preferably 1,3-butadiene.

Polyolefins that can be made by an invention process include, for example, polyethylene, polypropylene, and interpolymers that comprise residuals of ethylene and one or more polymerizable ($C_3$-$C_{40}$)olefins. Preferred homopolymers are high density polyethylene, polypropylene, and polybutylene. Preferred interpolymers are those prepared by co-polymerizing a mixture of two or more polymerizable olefins such as, for example, ethylene/propylene, ethylene/1-butene, ethylene/1-pentene, ethylene/1-hexene, ethylene/4-methyl-1-pentene, ethylene/1-octene, ethylene/styrene, ethylene/propylene/butadiene and other EPDM terpolymers. Preferably, the polyolefin is an ethylene homopolymer (e.g., a high density polyethylene), an ethylene/alpha-olefin interpolymer (i.e., poly(ethylene alpha-olefin) copolymer such as, for example, apoly(ethylene 1-octene)), or an ethylene/alpha-olefin/diene interpolymer (i.e., a poly(ethylene alpha-olefin diene) terpolymer such as, for example, a poly(ethylene 1-octene 1,3-butadiene).

In a fourth embodiment, the present invention is a polyolefin, preferably the aforementioned poly(ethylene alpha-olefin) block copolymer prepared according to a preferred process of the third embodiment. Preferably, the residuals of the alpha-olefin and ethylene typically are approximately randomly distributed in the soft segment.

Preferably, the polyethylene hard segment is characterizable as having less than 5 mole percent (mol%) of a residual of the alpha-olefin covalently incorporated therein (i.e., having a low comonomer incorporation index), as determined by nuclear magnetic resonance as described later.

Preferably, the poly(ethylene alpha-olefin) block copolymer is characterizable as having a melting temperature of greater than 100 degrees Celsius, and more preferably greater than 120 °C, as determined by Differential Scanning Calorimetry using the procedure described later.

The poly(ethylene alpha-olefin) block copolymers comprise ethylene residuals and one or more copolymerizable $\alpha$-olefin comonomer residuals (i.e., ethylene and one or more copolymerizable $\alpha$-olefin comonomers in polymerized form). The poly(ethylene alpha-olefin) block copolymers are characterized by multiple blocks or segments of two or more polymerized monomer units differing in chemical or physical properties. That is, the ethylene/$\alpha$-olefin interpolymers are block interpolymers, preferably multi-block interpolymers or copolymers. The terms "interpolymer" and copolymer" are used interchangeably herein. In some embodiments, the multi-block copolymer can be represented by the following formula:

$$(AB)n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a linear fashion, not in a branched or a star fashion.

"Hard" segments refer to blocks of polymerized units in which ethylene residuals are present in an amount greater than 95 weight percent, and preferably greater than 98 weight percent in the poly(ethylene alpha-olefin) block copolymers. In other words, the comonomer (i.e., alpha-olefin) residuals content in the hard segments is less than 5 weight percent, and preferably less than 2 weight percent. In some embodiments, the hard segments comprise all or substantially all ethylene residuals. The phrases "polyethylene hard segment" and "ethylene-derived hard segment" are synonymous and mean the hard segment portion of a poly(ethylene alpha-olefin) block copolymer.

"Soft" segments refer to blocks of polymerized units in which the comonomer (i.e., alpha-olefin) residuals content is greater than 5 weight percent, preferably greater than 8 weight percent, greater than 10 weight percent, or greater than 15 weight percent in the poly(ethylene alpha-olefin) block copolymers. In some embodiments, the comonomer residuals content in the soft segments can be greater than 20 weight percent, greater than 25 eight percent, greater than 30 weight percent, greater than 35 weight percent, greater than 40 weight percent, greater than 45 weight percent, greater than 50 weight percent, or greater than 60 weight percent.

In some embodiments, A blocks and B blocks are randomly distributed along a polymer (backbone) chain of the poly(ethylene alpha-olefin) block copolymer. In other words, the poly(ethylene alpha-olefin) block copolymers usually do not have a structure like:

AAA-AA-BBB-BB.

In other embodiments, the poly(ethylene alpha-olefin) block copolymers usually do not have a third type of block, i.e., do not have a "C" block that is not an A block and not a B block. In still other embodiments, each of block A and block B of the poly(ethylene alpha-olefin) block copolymers has monomers or comonomers randomly distributed within the block. In other words, neither block A nor block B comprises two or more segments (or sub-blocks) of distinct composition, such as a tip segment, which has a different composition than the rest of the block.

In some embodiments, the polyolefin comprises a poly(ethylene alpha-olefin) block copolymer, i.e., an ethylene/alpha-olefin interpolymer, such as those described in PCT International Patent Application Publication Number WO

2009/097560, which is herein incorporated by reference, preferably a block copolymer, which comprises a hard segment and a soft segment, and is characterized by a $M_w/M_n$ in the range of from about 1.4 to about 2.8 and:

(a) has at least one $T_m$ (°C), and a density (d) in grams/cubic centimeter, wherein the numerical values of $T_m$ and d correspond to the relationship:

$$T_m > -6553.3 + 13735(d) - 7051.7(d)^2,$$

or

(b) is characterized by a heat of fusion (ΔH, in J/g), and a delta temperature quantity (ΔT, in °C), defined as the temperature difference between the tallest differential scanning calorimetry (DSC) peak and the tallest crystallization analysis fractionation (CRYSTAF) peak, wherein the numerical values of ΔT and ΔH have the following relationships:

$$\Delta T > -0.1299(\Delta H) + 62.81 \text{ for } \Delta H \text{ greater than zero (0) and up to 130 J/g},$$

$$\Delta T \geq 48\ ^{\circ}C \text{ for } \Delta H \text{ greater than 130 J/g},$$

wherein the CRYSTAF peak is determined using at least 5 percent of the cumulative polymer, and if less than 5 percent of the polymer has an identifiable CRYSTAF peak, then the CRYSTAF temperature is 30 °C; or

(c) is characterized by an elastic recovery ($R_e$) in percent at 300 percent strain and 1 cycle measured with a compression-molded film of the ethylene/alpha-olefin interpolymer, and has a density d in grams/cubic centimeter, wherein the numerical values of $R_e$ and d satisfy the following relationship when ethylene/alpha-olefin interpolymer is substantially free of a cross-linked phase:

$$R_e > 1481-1629(d);$$

or

(d) has a molecular fraction which elutes between 40 °C and 130 °C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/alpha-olefin interpolymer; or

(e) has a storage modulus at 25 °C (G'(25 °C)) and a storage modulus at 100°C (G' (100 °C)) wherein the ratio of G'(25 °C) to G'(100 °C) is in the range of about 1:1 to about 9:1; or

(f) is characterized by an average block index greater than zero (0) and up to about 1.0; or

(g) has a molecular fraction which elutes between 40 °C and 130 °C when fractionated using TREF, characterized in that the fraction has a molar comonomer content greater than, or equal to, the quantity (- 0.2013) T + 20.07, more preferably greater than or equal to the quantity (-0.2013) T+ 21.07, where T is the numerical value of the peak elution temperature of the TREF fraction, measured in °C; and,

wherein the ethylene/alpha-olefin block interpolymer is mesophase separated.

In some embodiments, the polyolefin comprises an ethylene/alpha-olefin interpolymer, such as that described in U.S. Patent No. US 7,355,089 and U.S. Patent Application Publication No. US 2006-0199930, wherein the interpolymer is preferably a block copolymer, and comprises a hard segment and a soft segment, and the ethylene/alpha-olefin interpolymer:

(a) has a $M_w/M_n$ from about 1.7 to about 3.5, at least one $T_m$ (°C), and a density d, in grams/cubic centimeter, wherein the numerical values of $T_m$ and d correspond to the relationship:

$$Tm > -2002.9 + 4538.5(d) - 2422.2(d)2;$$

or

(b) has a $M_w/M_n$ from about 1.7 to about 3.5, and is characterized by a heat of fusion, ΔH in J/g, and a delta quantity, ΔT (°C), defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48\ ^{\circ}C \text{ for } \Delta H \text{ greater than 130 J/g ,}$$

wherein the CRYSTAF peak is determined using at least 5 percent of the cumulative polymer, and if less than 5 percent of the polymer has an identifiable CRYSTAF peak, then the CRYSTAF temperature is 30 °C; or

(c) is characterized by an $R_e$ in percent at 300 percent strain and 1 cycle measured with a compression-molded film of the ethylene/alpha-olefin interpolymer, and has a density, d, in grams/cubic centimeter, wherein the numerical values of $R_e$ and d satisfy the following relationship when ethylene/alpha-olefin interpolymer is substantially free of a cross-linked phase:

$$R_e > 1481\text{-}1629(d);$$

or

(d) has a molecular fraction which elutes between 40 °C and 130 °C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/alpha-olefin interpolymer; or

(e) has a storage modulus at 25 °C (G'(25 °C)), and a storage modulus at 100 °C, (G'(100 °C)), wherein the ratio of G'(25 °C) to G'(100 °C) is in the range of about 1:1 to about 9:1 or

(f) has a molecular fraction which elutes between 40 °C and 130 °C when fractionated using TREF, characterized in that the fraction has a block index of at least 0.5 and up to about 1 and a $M_w/M_n$ greater than about 1.3; or

(g) has an average block index greater than zero (0) and up to about 1.0 and a $M_w/M_n$ greater than about 1.3; or

(h) has a molecular fraction which elutes between 40 °C and 130 °C when fractionated using TREF, characterized in that the fraction has a molar comonomer content greater than, or equal to, the quantity (- 0.2013) T + 20.07, more preferably greater than or equal to the quantity (-0.2013) T+ 21.07, where T is the numerical value of the peak elution temperature of the TREF fraction, measured in °C.

Other embodiments comprise polymers and processes such as those described in PCT International Patent Application Publication Nos. WO 2005/090425, WO 2005/090426, and WO 2005/090427.

Monomer and any comonomer content of the polyolefins may be measured using any suitable technique such as, for example, infrared (IR) spectroscopy and nuclear magnetic resonance (NMR) spectroscopy, with techniques based on NMR spectroscopy being preferred and carbon-13 NMR spectroscopy being more preferred. To use carbon-13 NMR spectroscopy, prepare an analysis sample from a polymer sample by adding approximately 3g of a 50/50 mixture of tetrachloroethane-$d^2$/orthodichlorobenzene to 0.4 g of the polymer sample in a 10 millimeter (mm) NMR tube. Dissolve and homogenize the polymer sample by heating the tube and its contents to 150 °C. Collect carbon-13 NMR spectroscopy data using a JEOL Eclipse™ 400MHz spectrometer or a Varian Unity Plus™ 400MHz spectrometer, corresponding to a carbon-13 resonance frequency of 100.5 MHz. Acquire the carbon-13 data using 4000 transients per data file with a 6 second pulse repetition delay. To achieve minimum signal-to-noise for quantitative analysis, add multiple data files together. The spectral width is 25,000 Hz with a minimum file size of 32,000 data points. Analyze the analysis sample at 130 °C in a 10 mm broad band probe. Determine the comonomer incorporation with the carbon-13 data using Randall's triad method (Randall, J.C.; JMS-Rev. Macromol. Chem. Phys., C29, 201-317 (1989), which is incorporated by reference herein in its entirety.

In some embodiments, the amount of olefin comonomer incorporated into the poly(olefin monomer-olefin comonomer) block copolymer or segments thereof is characterized by a comonomer incorporation index. As used herein, the term, "comonomer incorporation index", refers to the mole percent of residuals of olefin comonomer incorporated into olefin monomer/comonomer copolymer, or segment thereof, prepared under representative olefin polymerization conditions. Preferably, the olefin monomer is ethylene or propylene and the comonomer respectively is an $(C_3\text{-}C_{40})$alpha-olefin or $(C_4\text{-}C_{40})$alpha-olefin. The olefin polymerization conditions are ideally under steady-state, continuous solution

polymerization conditions in a hydrocarbon diluent at 100 °C, 4.5 megapascals (MPa) ethylene (or propylene) pressure (reactor pressure), greater than 92 percent (more preferably greater than 95 percent) olefin monomer conversion, and greater than 0.01 percent olefin comonomer conversion. The selection of catalyst compositions, which include the invention catalyst, having the greatest difference in olefin comonomer incorporation indices results in poly(olefin monomer-olefin comonomer) block copolymers from two or more olefin monomers having the largest difference in block or segment properties, such as density.

In certain circumstances the comonomer incorporation index may be determined directly, for example by the use of NMR spectroscopic techniques described previously or by IR spectroscopy. If NMR or IR spectroscopic techniques cannot be used, then any difference in comonomer incorporation is indirectly determined. For polymers formed from multiple monomers this indirect determination may be accomplished by various techniques based on monomer reactivities.

For copolymers produced by a given catalyst, the relative amounts of comonomer and monomer in the copolymer and hence the copolymer composition is determined by relative rates of reaction of comonomer and monomer. Mathematically the molar ratio of comonomer to monomer is given by the equations described in US 2007/0167578 A1, in paragraphs numbered [0081] to [0090].

For this model as well the polymer composition is a function only of temperature dependent reactivity ratios and comonomer mole fraction in the reactor. The same is also true when reverse comonomer or monomer insertion may occur or in the case of the interpolymerization of more than two monomers.

Reactivity ratios for use in the foregoing models may be predicted using well known theoretical techniques or empirically derived from actual polymerization data. Suitable theoretical techniques are disclosed, for example, in B. G. Kyle, Chemical and Process Thermodynamics, Third Addition, Prentice-Hall, 1999 and in Redlich-Kwong-Soave (RKS) Equation of State, Chemical Engineering Science, 1972, pp 1197-1203. Commercially available software programs may be used to assist in deriving reactivity ratios from experimentally derived data. One example of such software is *Aspen Plus from* Aspen Technology, Inc., Ten Canal Park, Cambridge, MA 02141-2201 USA.

At times it is convenient to incorporate by reference examples of an associate olefin polymerization catalyst that can be used in embodiments of the invention process for polymerizing an olefin comprising chain shuttling and employing the invention catalyst. For convenience and consistency, one of the invention catalyst and associate olefin polymerization catalyst are thus sometimes referred to herein using generic terms such as a "first olefin polymerization catalyst" and one as a "second olefin polymerization catalyst" or vice versa That is, in some embodiments, the first olefin polymerization catalyst is the same as the invention catalyst and the second olefin polymerization catalyst is the same as the associate olefin polymerization catalyst; and vice versa in other embodiments. As used herein, the first olefin polymerization catalyst is characterizable as having a high comonomer incorporation index and the second olefin polymerization catalyst is characterizable as having a comonomer incorporation index that is less than 95 percent of the high comonomer incorporation index. Preferably, the second olefin polymerization catalyst is characterized as having a comonomer incorporation index that is less than 90 percent, more preferably less than 50 percent, still more preferably less than 25 percent, and even more preferably less than 10 percent of the high comonomer incorporation index of the first olefin polymerization catalyst.

When preparing the poly(ethylene alpha-olefin) block copolymer according to the preferred process of the third embodiment, the catalyst system comprises a mixture or reaction product of:

(A) a first olefin polymerization catalyst, the first olefin polymerization catalyst being characterized as having a high comonomer incorporation index;
(B) a second olefin polymerization catalyst, the second olefin polymerization catalyst being characterized as having a comonomer incorporation index that is less than 90 percent of the comonomer incorporation index of the first olefin polymerization catalyst; and
(C) a chain shuttling agent;

the catalyst of the first embodiment comprising either the first or second olefin polymerization catalyst.

The term "catalyst" as generally used herein may refer to an unactivated form of a metal-ligand complex (i.e., precursor) or, preferably, the activated form thereof (e.g., after contact of the unactivated form with an activating cocatalyst to give a catalytically active mixture or product thereof). For the associate olefin polymerization catalyst comprising or prepared from a non-invention metal-ligand complex, a metal of the non-invention metal-ligand complex can be a metal of any one of Groups 3 to 15, preferably Group 4, of the Periodic Table of the Elements. Examples of types of suitable non-invention metal-ligand complexes are metallocene, half-metallocene, constrained geometry, and polyvalent pyridylamine-, polyether-, or other polychelating base complexes. Such non-invention metal-ligand complexes are described in the WO 2008/027283 and corresponding US Patent Application No. 12/377,034. Other suitable non-invention metal-ligand complexes are those described in US 5,064,802; US 5,153,157; US 5,296,433; US 5,321,106; US 5,350,723; US 5,425,872; US 5,470,993; US 5,625,087; US 5,721,185; US 5,783,512; US 5,866,704; US 5,883,204; US 5,919,983;

US 6,015,868; US 6,034,022; US 6,103,657; US 6,150,297; US 6,268,444; US 6,320,005; US 6,515,155; US 6,555,634; US 6,696,379; US 7,163,907; and US 7,355,089, as well as in applications WO 02/02577; WO 02/92610; WO 02/38628; WO 03/40195; WO 03/78480; WO 03/78483; WO 2009/012215 A2; US 2003/0004286; and US 04/0220050; US 2006/0199930 A1; US 2007/0167578 A1; and US 2008/0311812 A1.

The "first olefin polymerization catalyst" is interchangeably referred to herein as "Catalyst (A)." The "second olefin polymerization catalyst" is interchangeably referred to herein as "Catalyst (B)." The selection of metal complexes or catalyst compositions having the greatest difference in comonomer incorporation indices results in copolymers from two or more monomers having the largest difference in block or segment properties, such as density.

Preferably, the comonomer incorporation index of Catalyst (B) is less than 50 percent and more preferably less than 5 percent of the comonomer incorporation index of Catalyst (A). An example of Catalyst (B) is the aforementioned "ethylene-polymerization catalyst."

In some embodiments, the catalyst of the first embodiment comprises Catalyst (A), but not Catalyst (B). In such embodiments, preferably the Catalyst (B) of the catalyst system is a Catalyst (B) described in US 2006/0199930 A1; US 2007/0167578 A1; US 2008/0311812 A1; US 7,355,089 B2; or WO 2009/012215 A2.

In some embodiments, the catalyst of the first embodiment comprises Catalyst (B), but not Catalyst (A). In such embodiments, preferably the Catalyst (A) of the catalyst system is a Catalyst (A) described in US 2006/0199930 A1; US 2007/0167578 A1; US 2008/0311812 A1; US 7,355,089 B2; or WO 2009/012215 A2.

Representative Catalysts (A) and (B) of US 2006/0199930 A1; US 2007/0167578 A1; US 2008/0311812 A1; US 7,355,089 B2; or WO 2009/012215 A2 are the catalysts of formulas (A1) to (A5), (B1), (B2), (C1) to (C3), and (D1):

Catalyst (A1) is [N-(2,6-di(1-methylethyl)phenyl)amido)(2-isopropylphenyl)($\alpha$-naphthalen-2-diyl(6-pyridin-2-diyl)methane)]hafnium dimethyl, prepared according to the teachings of WO 03/40195, 2003US0204017, USSN 10/429,024, filed May 2, 2003, and WO 04/24740, and having the structure:

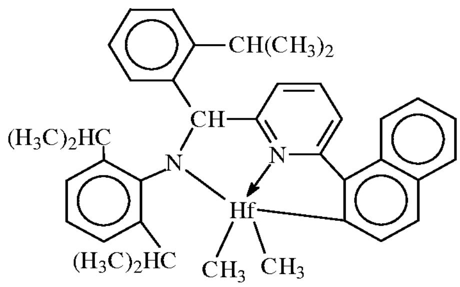

(A1);

Catalyst (A2) is [N-(2,6-di(1-methylethyl)phenyl)amido)(2-methylphenyl)(1,2-phenylene-(6-pyridin-2-diyl)methane)]hafnium dimethyl, prepared according to the teachings of WO 03/40195, 2003US0204017, USSN 10/429,024, filed May 2, 2003, and WO 04/24740, and having the structure:

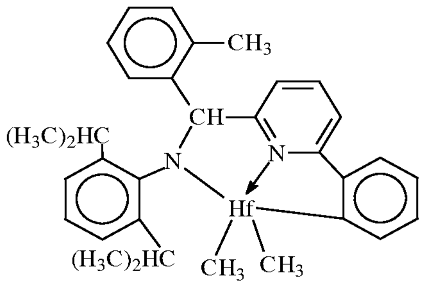

(A2);

Catalyst (A3) is bis[N,N'''-(2,4,6-tri(methylphenyl)amido)ethylenediamine]hafnium dibenzyl, and having the structure:

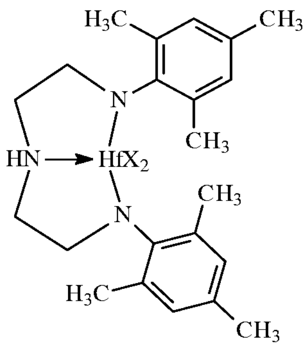

X= $CH_2C_6H_5$

(A3);

Catalyst (A4) is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103, and having the structure:

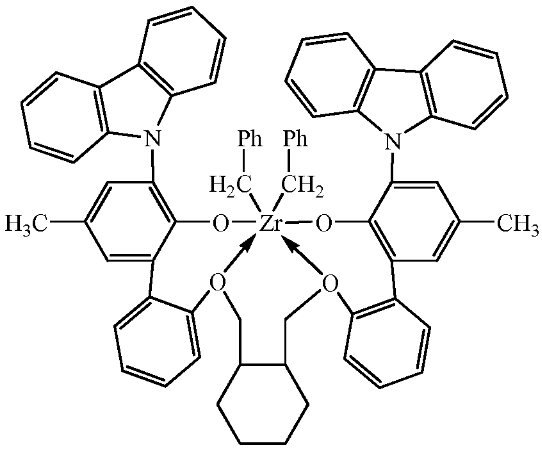

(A4);

Catalyst (A5) is [$\eta^2$-2,6-diisopropyl-*N*-(2-methyl-3-(octylimino)butan-2-yl)benzeneamide]trimethylhafnium, prepared substantially according to the teachings of WO 2003/051935, and having the structure:

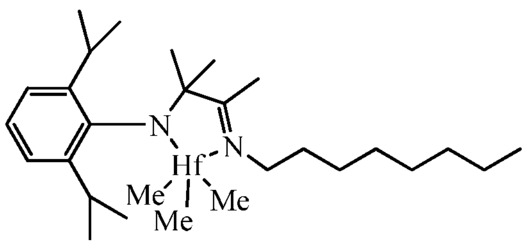

(A5);

Catalyst (B1) is 1,2-bis-(3,5-di-t-butylphenylene)(1-(N-(1-methylethyl)imino)methyl)(2-oxoyl) zirconium dibenzyl, and having the structure:

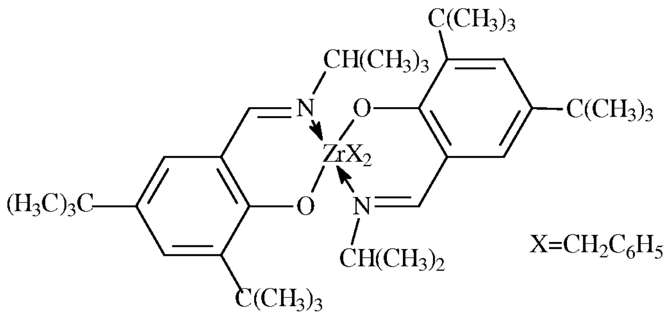

(B1);

Catalyst (B2) is 1,2-bis-(3,5-di-t-butylphenylene)(1-(N-(2-methylcyclohexyl)-imino)methyl)(2-oxoyl) zirconium dibenzyl, and having the structure:

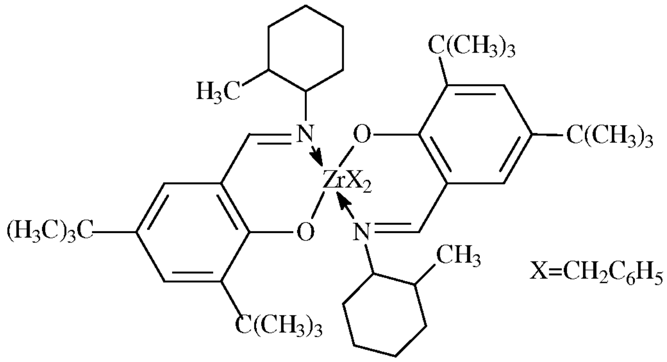

(B2);

Catalyst (C1) is (t-butylamido)dimethyl(3-N-pyrrolyl-1,2,3,3a,7a-η-inden-1-yl)silanetitanium dimethyl, prepared substantially according to the techniques of USP 6,268,444, and having the structure:

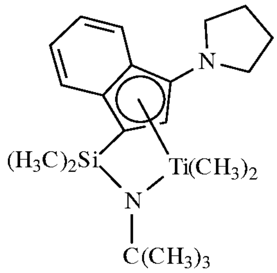

(C1);

Catalyst (C2) is (t-butylamido)di(4-methylphenyl)(2-methyl-1,2,3,3a,7a-η-inden-1-yl)silanetitanium dimethyl, prepared substantially according to the teachings of US-A-2003/004286, and having the structure:

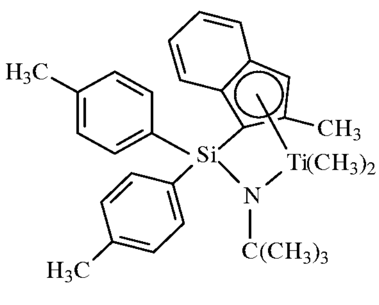

(C2);

Catalyst (C3) is (t-butylamido)di(4-methylphenyl)(2-methyl-1,2,3,3a,8a-η-s-indacen-1-yl)silanetitanium dimethyl, prepared substantially according to the teachings of US-A-2003/004286, and having the structure:

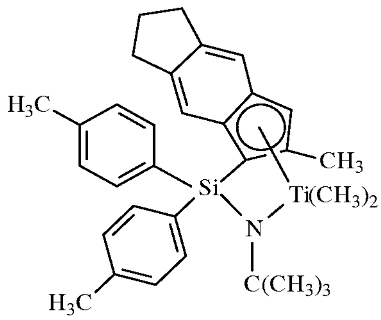

(C3);

and

Catalyst (D1) is bis(dimethyldisiloxane)(indene-1-yl)zirconium dichloride, available from Sigma-Aldrich, and having the structure:

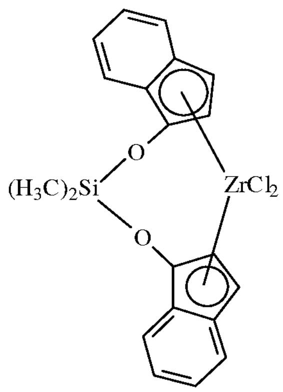

(D1).

In some embodiments of the invention process for polymerizing an olefin, the associate olefin polymerization catalysts are rendered catalytically active by contacting them to, or reacting them with, a same cocatalyst (sometimes referred to as an activating cocatalyst or co-catalyst) or by using an activating technique such as those that are known in the art for use with metal (e.g., Group 4) olefin polymerization reactions.

Suitable cocatalysts for activating non-invention associate olefin polymerization catalysts include alkylaluminums, preferably the alkylaluminums described previously; polymeric or oligomeric alumoxanes (also known as aluminoxanes); neutral Lewis acids; and non-polymeric, non-coordinating, ion-forming compounds (including the use of such compounds under oxidizing conditions). A suitable activating technique is bulk electrolysis (explained in more detail hereinafter). Combinations of one or more of the foregoing cocatalysts and techniques are also contemplated. Aluminoxanes and their preparations are known at, for example, United States Patent Number (USPN) US 6,103,657. Examples of preferred polymeric or oligomeric alumoxanes are methylalumoxane, triisobutylaluminum-modified methylalumoxane, and isobutylalumoxane. Many cocatalysts and activating techniques have been previously taught with respect to different metal-ligand complexes in the following USPNs: US 5,064,802; US 5,153,157; US 5,296,433; US 5,321,106; US 5,350,723; US 5,425,872; US 5,625,087; US 5,721,185; US 5,783,512; US 5,883,204; US 5,919,983; US 6,696,379; and US 7,163,907. Examples of suitable hydrocarbyloxides are disclosed in US 5,296,433. Examples of suitable Bronsted acid salts for addition polymerization catalysts are disclosed in US 5,064,802; US 5,919,983; US 5,783,512. Examples of suitable salts of a cationic oxidizing agent and a non-coordinating, compatible anion as cocatalysts for addition polymerization catalysts are disclosed in US 5,321,106. Examples of suitable carbenium salts as cocatalysts for addition polymerization catalysts are disclosed in US 5,350,723. Examples of suitable silylium salts as cocatalysts for addition polymerization catalysts are disclosed in US 5,625,087. Examples of suitable complexes of alcohols, mercaptans, silanols, and oximes with tris(pentafluorophenyl)borane are disclosed in US 5,296,433. Some of these catalysts are also described in a portion of US 6,515,155 B1 beginning at column 50, at line 39, and going through column 56, at line 55, only the portion of which is incorporated by reference herein.

As mentioned previously, some embodiments of the invention process for polymerizing an olefin further employ a chain shuttling agent. The terms "chain shuttling agent" and "CSA" are interchangeably used herein and refer to a compound that is characterizable as being capable of causing, under the olefin polymerization conditions, exchange of a polymeryl chain (i.e., polymer chain or fragment) between at least two active catalyst sites of two olefin polymerization catalysts, the two olefin polymerization catalysts being the invention catalyst and the associate olefin polymerization

catalyst such as another invention catalyst or one of the non-invention catalysts described previously. That is, transfer of a polymer fragment occurs both to and from one or more of active sites of the olefin polymerization catalysts.

In contrast to a chain shuttling agent, a "chain transfer agent" causes termination of polymer chain growth and amounts to a one-time transfer of polymer from a catalyst (e.g., the invention catalyst) to the transfer agent. In some polymerization process embodiments such as those useful for preparing polyolefin homopolymers and random polyolefin copolymers, the CSA is characterizable as being capable of functioning as a chain transfer agent. That is, the CSA is capable of functioning in such a way that there is a one-time transfer of a polyolefin homopolymer or random polyolefin copolymer product formed in such polymerization process from the olefin polymerization catalyst (e.g., the invention catalyst) to the CSA. In such embodiments, it is not necessary for the CSA to reversibly chain shuttle, as such embodiments typically employ only one olefin polymerization catalyst, which may have or use only one active catalyst site.

In some embodiments, the chain shuttling agent is characterizable as having a chain shuttling activity ratio $R_{A-B}/R_{B-A}$. In general, for any two catalysts (A) and (B), the chain shuttling activity ratio $R_{A-B}/R_{B-A}$ is calculated by dividing a rate of chain transfer from an active site of a catalyst (A) to an active site of a catalyst (B) ($R_{A-B}$) by a rate of chain transfer from the active site of the catalyst (B) to the active site of the catalyst (A) ($R_{B-A}$). Preferably the catalyst (A) is the invention catalyst and the catalyst (B) is the aforementioned associate olefin polymerization catalyst. For the chain shuttling agent, preferably the chain shuttling activity ratio $R_{A-B}/R_{B-A}$ is from 0.01 to 100. Preferably, an intermediate formed between the chain shuttling agent and the polymeryl chain is sufficiently stable that chain termination is relatively rare. A (polyolefin-polyradical)-containing chain shuttling agent is an example of said intermediates.

By selecting different combinations of olefin polymerization catalysts having differing comonomer incorporation rates (as described herein) as well as differing reactivities, and by combining two or more CSAs (and preferably 3 or less CSAs), different poly(olefin monomer-olefin comonomer) multiblock copolymer products can be prepared in some embodiments of the invention process for polymerizing an olefin. Such different products can have segments of different densities or comonomer concentrations, different block lengths, different numbers of such segments or blocks, or a combination thereof. For example, if the chain shuttling activity of the chain shuttling agent is low relative to a polymer chain propagation rate of one or more of the olefin polymerization catalysts, longer block length multiblock copolymers and polymer blends may be obtained as products. Contrariwise, if chain shuttling is very fast relative to polymer chain propagation, a copolymer product having a more random chain structure and shorter block lengths is obtained. In generally, an extremely fast chain shuttling agent may produce a multiblock copolymer having substantially random copolymer properties. By proper selection of both catalyst(s) and the CSA, relatively pure block copolymers, copolymers containing relatively large polymer segments or blocks, and/or blends of the foregoing with various ethylene or propylene homopolymers and/or copolymers can be obtained as products.

In some embodiments of the invention process for polymerizing an olefin employing the CSAs, the chain shuttling agents that are suitable for use therein include Group 1, 2, 12 or 13 metal compounds or complexes containing at least one $(C_1-C_{20})$hydrocarbyl group, preferably $(C_1-C_{12})$hydrocarbyl substituted aluminum, gallium or zinc compounds, and reaction products thereof with a proton source. Preferred $(C_1-C_{20})$hydrocarbyl groups are alkyl groups, preferably linear or branched, $(C_1-C_8)$alkyl groups. Most preferred shuttling agents for use in the present invention are trialkyl aluminum and dialkyl zinc compounds, especially triethylaluminum, tri(i-propyl) aluminum, tri(i-butyl)aluminum, tri(n-hexyl)aluminum, tri(n-octyl)aluminum, triethylgallium, or diethylzinc. Additional suitable shuttling agents include the reaction product or mixture formed by combining the foregoing organometal compound, preferably a tri($(C_1-C_8)$alkyl) aluminum or di($(C_1-C_8)$alkyl) zinc compound, especially triethylaluminum, tri(i-propyl) aluminum, tri(i-butyl)aluminum, tri(n-hexyl)aluminum, tri(n-octyl)aluminum, or diethylzinc, with less than a stoichiometric quantity (relative to the number of hydrocarbyl groups) of a primary or secondary amine, primary or secondary phosphine, thiol, or hydroxyl compound, especially bis(trimethylsilyl)amine, t-butyl(dimethyl)silanol, 2-hydroxymethylpyridine, di(n-pentyl)amine, 2,6-di(t-butyl)phenol, ethyl(1-naphthyl)amine, bis(2,3,6,7-dibenzo-1-azacycloheptaneamine), diphenylphosphine, 2,6-di(t-butyl)thiophenol, or 2,6-diphenylphenol. Desirably, sufficient amine, phosphine, thiol, or hydroxyl reagent is used such that at least one hydrocarbyl group remains per metal atom. The primary reaction products of the foregoing combinations most desired for use in the present invention as shuttling agents are n-octylaluminum di(bis(trimethylsilyl)amide), i-propylaluminum bis(dimethyl(t-butyl)siloxide), and n-octylaluminum di(pyridinyl-2-methoxide), i-butylaluminum bis(dimethyl(t-butyl)siloxane), i-butylaluminum di(bis(trimethylsilyl)amide), n-octylaluminum di(pyridine-2-methoxide), i-butylaluminum bis(di(n-pentyl)amide), n-octylaluminum bis(2,6-di-t-butylphenoxide), n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide). Other suitable non-invention chain shuttling agents are described in WO 2005/073283 A1; WO 2005/090425 A1; WO 2005/090426 A1; WO 2005/090427 A2; WO 2006/101595 A1; WO 2007/035485 A1; WO 2007/035492 A1; and WO 2007/035493 A2.

In some embodiments, the olefin polymerizing conditions independently produce a catalyst *in situ* that is formed from by reaction of the metal-ligand complex of formula (I), alkyl aluminium, boron-containing ionic compound, and at least one other ingredient of the process of the third embodiment. Such other ingredients include, but are not limited to,

(i) olefin monomer; (ii) another metal-ligand complex of formula (I); (iii) one or more of Catalyst (A); (iv) one or more of Catalyst (B); (v) chain shuttling agent; (vi) a catalyst stabilizer (if any); (vii) a solvent (if any); and (viii) a mixture of any two or more thereof.

The phrase "olefin polymerizing conditions" independently refer to reaction conditions such as solvent(s), atmosphere(s), temperature(s), pressure(s), time(s), and the like that are preferred for giving at least a 10%, more preferably at least 20%, and still more preferably at least 30% reaction yield of the polyolefin from the process of the third embodiment after 15 minutes reaction time. Preferably, the processes independently are run under an inert atmosphere (e.g., under an inert gas consisting essentially of, for example, nitrogen gas, argon gas, helium gas, or a mixture of any two or more thereof). Other atmospheres are contemplated, however, and these include sacrificial olefin in the form of a gas and hydrogen gas (e.g., as a polymerization termination agent). In some aspects, the process of the third embodiment independently is run without any solvent, i.e., is a neat process that is run in a neat mixture of ingredients catalyst and olefin monomer(s). In other aspects, the neat mixture further contains additional ingredients as described herein. In still other aspects, the process of the third embodiment is run with a solvent or mixture of two or more solvents, e.g., an aprotic solvent. Preferably, the neat process or solvent-based process of the third embodiment is run at a temperature of the neat mixture or solvent-containing mixture of from -20 °C to about 200 °C. In some embodiments, the temperature is at least 30 °C, and more preferably at least 40 °C. In other embodiments, the temperature is 175 °C or lower, more preferably 150 °C or lower, and still more preferably 140 °C or lower. A convenient temperature is about 70 °C or about 130 °C. Preferably the process of the third embodiment independently is run under a pressure of from about 0.9 atmospheres (atm) to about 10 atm (i.e., from about 91 kiloPascals (kPa) to about 1010 kPa). More preferably, the pressure is about 1 atm (i.e., about 101 kPa).

Preferably, the olefin polymerizing conditions for preparing the preferred poly(ethylene alpha-olefin) block copolymer are characterizable by a reaction rate constant $k_{11}$ for adding an ethylene monomer to a reactive chain end comprising an ethylene residual; a reaction rate constant $k_{12}$ for adding an alpha-olefin monomer to a reactive chain end comprising an ethylene residual; and a reactivity ratio $r_1$ equal to $k_{11}$ divided by $k_{12}$ of greater than 10 (i.e., $r_1 = k_{11}/k_{12} > 10$), preferably greater than 20, more preferably greater than 30, still more preferably greater than 50, and even more preferably greater than 100. More preferably, the olefin polymerizing conditions can be further characterized by a reaction rate constant $k_{21}$ for adding an ethylene monomer to a reactive chain end comprising an alpha-olefin residual; a reaction rate constant $k_{22}$ for adding an alpha-olefin monomer to a reactive chain end comprising an alpha-olefin residual; and a reactivity ratio $r_2$ equal to $k_{22}$ divided by $k_{21}$ of greater than 1 (i.e., $r_2 = k_{22}/k_{21} > 1$). Still more preferably, the olefin polymerizing conditions can be further characterized by $r_1 > r_2$. In some embodiments, the polyethylene hard segment of the poly(ethylene alpha-olefin) block copolymer is characterized as having at least 0.1 mol%, in some embodiments at least 0.2 mol%, in some embodiments at least 0.5 mol%, and in some embodiments at least 1.0 mol% of the residual of the alpha-olefin covalently incorporated in the polyethylene hard segment of the poly(ethylene alpha-olefin) block copolymer.

When used to describe a chemical group (e.g., $(C_1-C_{40})$alkyl), the parenthetical expression of the form "$(C_x-C_y)$," means that the unsubstituted version of the chemical group comprises from a number x carbon atoms to a number y carbon atoms, wherein each x and y independently is an integer as described for the chemical group. Thus, for example, an unsubstituted $(C_1-C_{40})$alkyl contains from 1 to 40 carbon atoms. When one or more substituents on the chemical group contain one or more carbon atoms, the substituted $(C_x-C_y)$ chemical group may comprise more than y total carbon atoms; i.e., the total number of carbon atoms of the substituted $(C_x-C_y)$ chemical group is equal to y plus the sum of the number of carbon atoms of each of the substituent(s). Any atom of a chemical group that is not specified herein is understood to be a hydrogen atom.

In some embodiments, each of the X, $R^1$, $L^1$ and $L^2$ groups of the metal-ligand complex of formula (I) is unsubstituted, that is, can be defined without use of a substituent $R^S$. In other embodiments, at least one of the X, $R^1$, $L^1$ and $L^2$ independently contain one or more of the substituents $R^S$. Preferably there are not more than a total of 20 $R^S$, more preferably not more than a total of 10 $R^S$, and still more preferably not more than a total of 5 $R^S$ in metal-ligand complex of formula (I). Where the invention compound contains two or more substituents $R^S$, each $R^S$ independently is bonded to a same or different substituted chemical group.

In some embodiments, at least one $R^S$ is polyfluoro or perfluoro. For present purposes "polyfluoro" and "perfluoro" each count as one $R^S$ substituent. The term "poly" as in "polyfluoro" means that two or more H, but not all H, bonded to carbon atoms of a corresponding unsubstituted chemical group are replaced by a fluoro in the substituted chemical group. The term "per" as in "perfluoro" means each H bonded to carbon atoms of a corresponding unsubstituted chemical group is replaced by a fluoro in the substituted chemical group.

As used herein, the term "$(C_1-C_{40})$hydrocarbyl" means a hydrocarbon radical of from 1 to 40 carbon atoms and the term "$(C_1-C_{40})$hydrocarbylene" means a hydrocarbon diradical of from 1 to 40 carbon atoms, wherein each hydrocarbon radical and diradical independently is aromatic or non-aromatic, saturated or unsaturated, straight chain or branched chain, cyclic (including mono-and poly-cyclic, fused and non-fused polycyclic) or acyclic, or a combination of two or more thereof; and each hydrocarbon radical and diradical is the same as or different from another hydrocarbon

radical and diradical, respectively, and independently is unsubstituted or substituted by one or more $R^S$. The term "saturated" means lacking carbon-carbon double bonds, carbon-carbon triple bonds, and (in heteroatom-containing groups) carbon-nitrogen, carbon-phosphorous, and carbon-silicon double bonds. Where a saturated chemical group is substituted by one or more substituents $R^S$, one or more double and/or triple bonds optionally may or may not be present in substituents $R^S$. The term "unsaturated" means containing one or more carbon-carbon double bonds, carbon-carbon triple bonds, and (in heteroatom-containing groups) carbon-nitrogen, carbon-phosphorous, and carbon-silicon double bonds, not including any such double bonds that may be present in substituents $R^S$, if any, or in (hetero)aromatic rings, if any.

Preferably, a ($C_1$-$C_{40}$)hydrocarbyl independently is an unsubstituted or substituted ($C_1$-$C_{40}$)alkyl, ($C_3$-$C_{40}$)cycloalkyl, ($C_3$-$C_{20}$)cycloalkyl-($C_1$-$C_{20}$)alkylene, ($C_6$-$C_{40}$)aryl, or ($C_6$-$C_{20}$)aryl-($C_1$-$C_{20}$)alkylene. More preferably, each of the aforementioned groups independently has a maximum of 20 carbon atoms (e.g., ($C_1$-$C_{20}$)alkyl, ($C_3$-$C_{20}$)cycloalkyl, ($C_3$-$C_{10}$)cycloalkyl-($C_1$-$C_{10}$)alkylene, ($C_6$-$C_{20}$)aryl, or ($C_6$-$C_{10}$)aryl-($C_1$-$C_{10}$)alkylene), still more preferably 10 carbon atoms (e.g., ($C_1$-$C_{10}$)alkyl, ($C_3$-$C_{10}$)cycloalkyl, ($C_3$-$C_6$)cycloalkyl-($C_1$-$C_4$)alkylene, ($C_6$-$C_{10}$)aryl, or ($C_6$-$C_{60}$)aryl-($C_1$-$C_4$)alkylene).

The term "($C_1$-$C_{40}$)alkyl" means a saturated straight or branched hydrocarbon radical of from 1 to 40 carbon atoms that is unsubstituted or substituted by one or more $R^S$. Preferably, ($C_1$-$C_{40}$)alkyl has a maximum of 20 carbon atoms, more preferably 10 carbon atoms, still more preferably 6 carbon atoms. Examples of unsubstituted ($C_1$-$C_{40}$)alkyl are unsubstituted ($C_1$-$C_{20}$)alkyl; unsubstituted ($C_1$-$C_{10}$)alkyl; unsubstituted ($C_1$-$C_5$)alkyl; methyl; ethyl; 1-propyl; 2-propyl; 1-butyl; 2-butyl; 2-methylpropyl; 1,1-dimethylethyl; 1-pentyl; 1-hexyl; 1-heptyl; 1-nonyl; and 1-decyl. Examples of substituted ($C_1$-$C_{40}$)alkyl are substituted ($C_1$-$C_{20}$)alkyl, substituted ($C_1$-$C_{10}$)alkyl, trifluoromethyl, and ($C_{45}$)alkyl. Preferably, each ($C_1$-$C_5$)alkyl independently is methyl, trifluoromethyl, ethyl, 1-propyl, or 2-methylethyl.

The term "($C_6$-$C_{40}$)aryl" means an unsubstituted or substituted (by one or more $R^S$) mono-, bi- or tricyclic aromatic hydrocarbon radical of from 6 to 40 total carbon atoms, of which at least from 6 to 14 are ring carbon atoms, and the mono-, bi- or tricyclic radical comprises 1, 2 or 3 rings, wherein the 2 or 3 rings independently are fused or non-fused and the 1 ring is aromatic and at least of the 2 or 3 rings is aromatic. Preferably, ($C_6$-$C_{40}$)aryl has a maximum of 18 carbon atoms, more preferably 10 carbon atoms, still more preferably 6 carbon atoms. Examples of unsubstituted ($C_6$-$C_{40}$)aryl are unsubstituted ($C_6$-$C_{20}$)aryl; unsubstituted ($C_6$-$C_{18}$)aryl; 2-($C_1$-$C_5$)alkyl-phenyl; 2,4-bis($C_1$-$C_5$)alkyl-phenyl; phenyl; fluorenyl; tetrahydrofluorenyl; indacenyl; hexahydroindacenyl; indenyl; dihydroindenyl; naphthyl; tetrahydronaphthyl; and phenanthrene. Examples of substituted ($C_6$-$C_{40}$)aryl are substituted ($C_6$-$C_{20}$)aryl; substituted ($C_6$-$C_{18}$)aryl; 2,4-bis[($C_{20}$)alkyl]-phenyl; polyfluorophenyl; pentafluorophenyl; and fluoren-9-one-1-yl.

The term "($C_3$-$C_{40}$)cycloalkyl" means a saturated cyclic hydrocarbon radical of from 3 to 40 carbon atoms that is unsubstituted or substituted by one or more $R^S$. Preferably, ($C_3$-$C_{40}$)cycloalkyl has a maximum of 20 carbon atoms, more preferably 10 carbon atoms, still more preferably 6 carbon atoms. Examples of unsubstituted ($C_3$-$C_{40}$)cycloalkyl are unsubstituted ($C_3$-$C_{20}$)cycloalkyl, unsubstituted ($C_3$-$C_{10}$)cycloalkyl, cyclopropyl, cyclobutyl, cyclopentyl, cyclohexyl, cycloheptyl, cyclooctyl, cyclononyl, and cyclodecyl. Examples of substituted ($C_3$-$C_{40}$)cycloalkyl are substituted ($C_3$-$C_{20}$)cycloalkyl, substituted ($C_3$-$C_{10}$)cycloalkyl, cyclopentanon-2-yl, and 1-fluorocyclohexyl.

Thus, ($C_1$-$C_{40}$)hydrocarbylene means an unsubstituted or substituted diradical analog of ($C_6$-$C_{40}$)aryl, ($C_3$-$C_{40}$)cycloalkyl, or ($C_2$-$C_{40}$)alkyl, i.e., ($C_6$-$C_{40}$)arylene, ($C_3$-$C_{40}$)cycloalkylene, and ($C_2$-$C_{40}$)alkylene, respectively. More preferably, each of the aforementioned groups independently has a maximum of 20 carbon atoms (e.g., ($C_6$-$C_{18}$)arylene, ($C_3$-$C_{20}$)cycloalkylene, and ($C_2$-$C_{20}$)alkylene), still more preferably 10 carbon atoms (e.g., ($C_6$-$C_{10}$)arylene, ($C_3$-$C_{10}$)cycloalkylene, and ($C_2$-$C_{10}$)alkylene). In some embodiments, the diradicals are on adjacent carbon atoms (i.e., 1,2-diradicals), or spaced apart by one, two, or more intervening carbon atoms (e.g., respective 1,3-diradicals, 1,4-diradicals, etc.). Preferred is a 1,2-, 1,3-, 1,4-, or alpha,omega-diradical, more preferably a 1,2-diradical.

The term "($C_1$-$C_{20}$)alkylene" means a saturated straight or branched chain diradical of from 1 to 20 carbon atoms that is unsubstituted or substituted by one or more $R^S$. Preferably, ($C_1$-$C_{20}$)alkylene, together with atoms of formula (I) through which the ($C_1$-$C_{20}$)alkylene is bonded, comprise a 5- or 6-membered ring. Examples of unsubstituted ($C_1$-$C_{20}$)alkylene are unsubstituted ($C_1$-$C_{10}$)alkylene, including unsubstituted 1,2-($C_1$-$C_{10}$)alkylene; $-CH_2-$, $-CH_2CH_2-$, $-(CH_2)_3-$, I $-CH_2CHCH_3$, $-(CH_2)_4-$, $-(CH_2)_5-$, $-(CH_2)_6-$, $-(CH_2)_7-$, $-(CH_2)_8-$, and $-(CH_2)_4C(H)(CH_3)-$. Examples of substituted ($C_1$-$C_{20}$)alkylene are substituted ($C_1$-$C_{10}$)alkylene, $-CF_2-$, -C(O)-, and $-(CH_2)_{14}C(CH_3)_2(CH_2)_5-$ (i.e., a 6,6-dimethyl substituted normal-1,20-eicosylene).

The term "($C_1$-$C_{40}$)heterohydrocarbyl" means a heterohydrocarbon radical of from 1 to 40 carbon atoms and one or more heteroatoms N (when comprising -N=); O; S; S(O); $S(O)_2$; $Si(R^C)_3$; $P(R^P)$; and $N(R^N)$, wherein independently each $R^C$ is unsubstituted ($C_1$-$C_{18}$)hydrocarbyl, each $R^P$ is unsubstituted ($C_1$-$C_{18}$)hydrocarbyl; and each $R^N$ is unsubstituted ($C_1$-$C_{18}$)hydrocarbyl. The term "($C_1$-$C_{40}$)heterohydrocarbon" means a parent analog of ($C_1$-$C_{40}$)heterohydrocarbyl. The term "($C_1$-$C_{40}$)heterohydrocarbylene" means a heterohydrocarbon diradical of from 1 to 40 carbon atoms and one or more heteroatoms $SI(R^C)_3$, $P(R^P)$, $N(R^N)$, N, O, S, S(O), and $S(O)_2$ as defined above. The heterohydrocarbon radical and each of the heterohydrocarbon diradicals independently are on a carbon atom or heteroatom thereof. Each heterohydrocarbon radical and diradical independently is unsubstituted or substituted (by one or more $R^S$), aromatic or non-aromatic, saturated or unsaturated, straight chain or branched chain, cyclic (including mono- and poly-cyclic, fused and non-fused polycyclic) or acyclic, or a combination of two or more thereof; and each heterohydrocarbon is the same as or different from another.

Preferably, a $(C_1\text{-}C_{40})$heterohydrocarbyl independently is unsubstituted or substituted $(C_1\text{-}C_{40})$heteroalkyl, $(C_2\text{-}C_{40})$heterocycloalkyl, $(C_2\text{-}C_{40})$heterocycloalkyl-$(C_1\text{-}C_{20})$alkylene, $(C_3\text{-}C_{40})$cycloalkyl-$(C_1\text{-}C_{20})$heteroalkylene, $(C_2\text{-}C_{40})$heterocycloalkyl-$(C_1\text{-}C_{20})$heteroalkylene, $(C_1\text{-}C_{40})$heteroaryl, $(C_1\text{-}C_{20})$heteroaryl-$(C_1\text{-}C_{20})$alkylene, $(C_6\text{-}C_{20})$aryl-$(C_1\text{-}C_{20})$heteroalkylene, or $(C_1\text{-}C_{20})$heteroaryl-$(C_1\text{-}C_{20})$heteroalkylene. More preferably, each of the aforementioned groups has a maximum of 20 carbon atoms, still more preferably 10 carbon atoms. Thus, a more preferred $(C_1\text{-}C_{40})$heterohydrocarbyl independently includes unsubstituted or substituted $(C_1\text{-}C_{20})$heterohydrocarbyl, e.g., $(C_1\text{-}C_{20})$heteroalkyl, $(C_2\text{-}C_{20})$heterocycloalkyl, $(C_2\text{-}C_{10})$heterocycloalkyl-$(C_1\text{-}C_{10})$alkylene, $(C_3\text{-}C_{10})$cycloalkyl-$(C_1\text{-}C_{10})$heteroalkylene, $(C_2\text{-}C_{10})$heterocycloalkyl-$(C_1\text{-}C_{10})$heteroalkylene, $(C_1\text{-}C_{20})$heteroaryl, $(C_1\text{-}C_{10})$heteroaryl-$(C_1\text{-}C_{10})$alkylene, $(C_6\text{-}C_{10})$aryl-$(C_1\text{-}C_{10})$heteroalkylene, or $(C_1\text{-}C_{10})$heteroaryl-$(C_1\text{-}C_{10})$heteroalkylene. A still more preferred $(C_1\text{-}C_{40})$heterohydrocarbyl independently includes unsubstituted or substituted $(C_1\text{-}C_{10})$heterohydrocarbyl, e.g., $(C_1\text{-}C_{10})$heteroalkyl, $(C_2\text{-}C_{10})$heterocycloalkyl, $(C_2\text{-}C_6)$heterocycloalkyl-$(C_1\text{-}C_4)$alkylene, $(C_3\text{-}C_6)$cycloalkyl-$(C_1\text{-}C_4)$heteroalkylene, $(C_2\text{-}C_6)$heterocycloalkyl-$(C_1\text{-}C_4)$heteroalkylene, $(C_1\text{-}C_{10})$heteroaryl, $(C_1\text{-}C_5)$heteroaryl-$(C_1\text{-}C_5)$alkylene, $(C_6)$aryl-$(C_1\text{-}C_4)$heteroalkylene, or $(C_1\text{-}C_5)$heteroaryl-$(C_1\text{-}C_5)$heteroalkylene. Preferably, any $(C_2\text{-}C_{18})$heterocycloalkyl independently is unsubstituted or substituted $(C_2\text{-}C_9)$heterocycloalkyl.

The aforementioned heteroalkyl and heteroalkylene groups are saturated straight or branched chain radicals or diradicals, respectively, containing $(C_x\text{-}C_y)$ carbon atoms and one or more of the heteroatoms $Si(R^C)_3$, $P(R^P)$, $N(R^N)$, N, O, S, S(O), and $S(O)_2$ as defined above, wherein each of the heteroalkyl and heteroalkylene groups independently are unsubstituted or substituted by one or more $R^S$.

Examples of unsubstituted $(C_2\text{-}C_{40})$heterocycloalkyl are unsubstituted $(C_2\text{-}C_{20})$heterocycloalkyl, unsubstituted $(C_2\text{-}C_{10})$heterocycloalkyl, aziridin-1-yl, oxetan-2-yl, tetrahydrofuran-3-yl, pyrrolidin-1-yl, tetrahydrothiophen-S,S-dioxide-2-yl, morpholin-4-yl, 1,4-dioxan-2-yl, hexahydroazepin-4-yl, 3-oxa-cyclooctyl, 5-thia-cyclononyl, and 2-aza-cyclodecyl.

Examples of unsubstituted $(C_1\text{-}C_{40})$heteroaryl are unsubstituted $(C_1\text{-}C_{20})$heteroaryl, unsubstituted $(C_1\text{-}C_{10})$heteroaryl, pyrrol-1-yl; pyrrol-2-yl; furan-3-yl; thiophen-2-yl; pyrazol-1-yl; isoxazol-2-yl; isothiazol-5-yl; imidazol-2-yl; oxazol-4-yl; thiazol-2-yl; 1,2,4-triazol-1-yl; 1,3,4-oxadiazol-2-yl; 1,3,4-thiadiazol-2-yl; tetrazol-1-yl; tetrazol-2-yl; tetrazol-5-yl; pyridine-2-yl; pyrimidin-2-yl; pyrazin-2-yl; indol-1-yl; benzimidazole-1-yl; quinolin-2-yl; and isoquinolin-1-yl.

The term "halo" means fluoro (F), chloro (Cl), bromo (Br), or iodo (I) radical. Preferably, halo is fluoro or chloro, more preferably fluoro. The term "halide" means fluoride ($F^-$), chloride ($Cl^-$), bromide ($Br^-$), or iodide ($I^-$) anion.

Preferably, there are no O-O, S-S, or O-S bonds, other than O-S bonds in an S(O) or $S(O)_2$ diradical functional group, in the metal complex of formula (I).

Preferably, each substituted $(C_1\text{-}C_{40})$hydrocarbyl excludes and is different than unsubstituted or substituted $(C_1\text{-}C_{40})$heterohydrocarbyl (i.e., each substituted $(C_1\text{-}C_{40})$hydrocarbyl is as defined in the first embodiment, wherein the substituted $(C_1\text{-}C_{40})$hydrocarbyl is not an unsubstituted or substituted $(C_1\text{-}C_{40})$heterohydrocarbyl); preferably, each substituted $(C_1\text{-}C_{40})$hydrocarbylene excludes and is different than unsubstituted or substituted $(C_1\text{-}C_{40})$heterohydrocarbylene; and more preferably a combination thereof.

In some embodiments where any two or more of the neutral and anionic ligands $R^1$ to $R^4$ independently comprise a group having $R^K$ or $R^K$ and $R^L$, any $R^K$ and $R^L$, or any two $R^K$ of a same or different ligand can be taken together as described earlier to form the $(C_2\text{-}C_{40})$hydrocarbylene or $(C_1\text{-}C_{40})$heterohydrocarbylene. Where $R^K$ and $R^L$, or any two $R^K$ of different ligands are so taken together, in some embodiments the $(C_2\text{-}C_{40})$hydrocarbylene or $(C_1\text{-}C_{40})$heterohydrocarbylene covalently links two neutral ligands together, two anionic ligands together, one of the neutral ligands and one of the anionic ligands together, or a combination thereof.

In some embodiments, the aforementioned metal-ligand complex of formula (I) that is employed in the preparation of the catalyst of the first embodiment is the metal-ligand complex of formula (I) wherein at least one of $X^1$ and $X^2$ is O. In some embodiments, each of $X^1$ and $X^2$ is O. That is, the metal-ligand complex of formula (I) is a metal-ligand complex of formula (Ia):

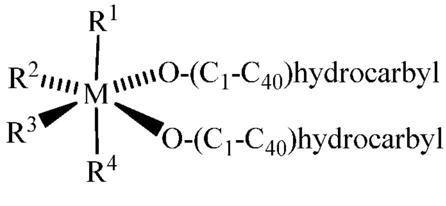

(Ia)

wherein $R^1$ to $R^4$ are as defined above for formula (I) in the first embodiment.

In some embodiments, the aforementioned metal-ligand complex of formula (I) that is employed in the preparation of the catalyst of the first embodiment is the metal-ligand complex of formula (I) wherein each of $X^1$ and $X^2$ is O and each of $L^1$ and $L^2$ independently is $(C_1-C_{40})$alkyl. That is, the metal-ligand complex of formula (I) is a metal-ligand complex of formula (Ib):

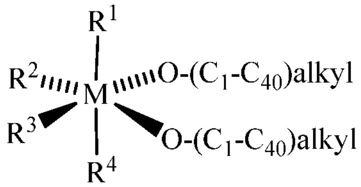

(Ib)

wherein $R^1$ to $R^4$ are as defined above for formula (I) in the first embodiment.

In some embodiments, the aforementioned metal-ligand complex of formula (I) that is employed in the preparation of the catalyst of the first embodiment is the metal-ligand complex of formula (I) wherein $X^1$ is $N(L^3)$, $L^1$ is $(C_1-C_{40})$alkyl, and $X^2$ and $L^2$ are as defined for the first embodiment. In some embodiments, $X^1$ is $N(L^3)$ and $X^2$ is $N(L^4)$ and each of $L^1$ and $L^2$ independently is $(C_1-C_{40})$hydrocarbyl. That is, the metal-ligand complex of formula (I) is a metal-ligand complex of formula (Ic):

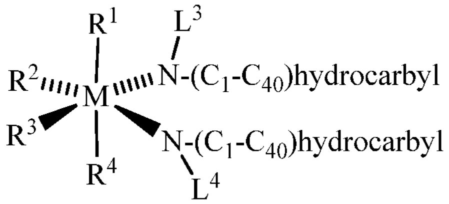

(Ic)

wherein $R^1$ to $R^4$, $X^2$, $L^3$ and $L^4$ are as defined above for formula (I) in the first embodiment.

In embodiments employing the metal-ligand complex of formula (I) or (Ic), preferably each of $L^3$ and $L^4$ independently is $(C_1-C_{40})$alkyl. In some embodiments, each $L^3$ and $L^4$ independently is $(C_1-C_4)$alkyl.

In some embodiments employing the metal-ligand complex of formula (I) or (Ic), $L^3$ is taken together with $L^1$ to form a $(C_2-C_{40})$alkylene and $L^4$ is $(C_1-C_{40})$alkyl.

In some embodiments employing the metal-ligand complex of formula (I) or (Ic), $L^3$ is taken together with $L^1$ to form a $(C_2-C_{40})$alkylene and $L^4$ is taken together with $L^2$ to form a $(C_2-C_{40})$alkylene.

When $L^3$ is taken together with $L^1$ to form a $(C_2-C_{40})$alkylene or independently both $L^3$ is taken together with $L^1$ to form a $(C_2-C_{40})$alkylene and $L^4$ is taken together with $L^2$ to form a $(C_2-C_{40})$alkylene, an example of the $(C_2-C_{40})$alkylene is butan-1,4-diyl and the butan-1,4-diyl together with the nitrogen atom of $X^1$ or $X^2$ to which it is attached is, for example, pyrrolidin-1-anion.

In some embodiments employing the metal-ligand complex of formula (I) or (Ic), $L^3$ is taken together with $L^4$ to form a $(C_2-C_{40})$alkylene. When $L^3$ is taken together with $L^4$ to form a $(C_2-C_{40})$alkylene, an example of the $(C_2-C_{40})$alkylene is propan-1,3-diyl and the propan-1,3-diyl together with the nitrogen atoms of $X^1$ and $X^2$ is propane-1,3-diamin-N,N'-dianion.

In some embodiments employing the metal-ligand complex of formula (I) or (Ic), $L^3$ is taken together with $L^1$ and $L^4$ to form a triradical analog of $(C_2-C_{40})$alkylene. An example of the triradical analog of $(C_2-C_{40})$alkylene is heptan-1,4,5-triyl and the heptan-1,4,5-triyl taken together with the nitrogen of $X^1$ is 3-propyl-pyrrolidin-1,1'-dianion.

In some embodiments employing the metal-ligand complex of formula (I) or (Ic), $L^3$ is taken together with $L^1$; and $L^4$ is taken together with $L^2$; and $L^4$ is also taken together with $L^3$ to form a tetraradical analog of $(C_2-C_{40})$alkylene. An example of the tetraradical analog of $(C_2-C_{40})$alkylene is nonan-1,4,6,9-tetrayl and the nonan-1,4,6,9-tetrayl taken together with the nitrogen atoms of $X^1$ and $X^2$ is dipyrrolidin-2-ylmethan-1,1'-dianion.

In the metal-ligand complex of formula (I), (Ia), (Ib), or (Ic), preferably two of $R^1$ to $R^4$ independently is $R^KOR^L$ and the other two of $R^1$ to $R^4$ independently is $R^KO^-$. In some embodiments, each $R^KO^-$ independently is $(C_1-C_{40})$hydrocarbylO$^-$ or, more preferably, $(C_6-C_{40})$arylO$^-$. In some embodiments, each of $R^K$ and $R^L$ independently is $(C_1-C_{40})$hydrocarbyl. In some embodiments, any $R^K$ and one $R^L$ of a same $R^KOR^L$ are taken together to form a $(C_2-C_{40})$hydrocarbylene and each of the other of $R^K$ and $R^L$ independently is the $(C_1-C_{40})$hydrocarbyl. In some embodiments, any $R^K$ of the $R^KO^-$ and any $R^L$ of the $R^KOR^L$ are taken together to form a $(C_2-C_{40})$hydrocarbylene and each of any other of $R^K$ and $R^L$ independently is the $(C_1-C_{40})$hydrocarbyl. In some embodiments, any $R^K$ of the $R^KO^-$ and any $R^L$ of the $R^KOR^L$ are taken together to form a $(C_2-C_{40})$hydrocarbylene and another $R^K$ of another one of the $R^KO^-$and another $R^L$ of another one of the $R^KOR^L$ independently are taken together to form another $(C_2-C_{40})$hydrocarbylene. Preferably, each

$(C_1-C_{40})$hydrocarbyl independently is $(C_1-C_{40})$alkyl or $(C_6-C_{40})$aryl.

In some embodiments, two of $R^1$ to $R^4$ independently is $R^KOR^L$ and the other two of $R^1$ to $R^4$ independently is $R^KO^-$, and at least two $R^K$, one $R^K$ and one $R^L$, or both two $R^K$ and one $R^K$ and one $R^L$ independently are taken together with the oxygen atoms to which they are attached to give the metal-ligand complex of formula (I) containing a tetradentate ligand. More preferably, two $R^K$, one $R^K$ and one $R^L$, and another $R^K$ and $R^L$ independently are taken together with the oxygen atoms to which they are attached to give the metal-ligand complex of formula (I) that is a metal-ligand complex of formula (Id):

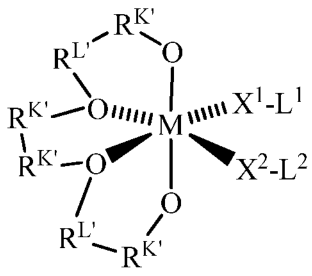

(Id)

wherein each $R^{K'}$- $R^{L'}$ and the $R^{K'}$-$R^{K'}$ independently is a $(C_2-C_{40})$hydrocarbylene and $X^1$, $X^2$, $L^1$, and $L^2$ are as defined for formula (I). Preferably, each $R^{K'}$-$R^{L'}$ independently is $(C_6-C_{40})$arylene and the $R^{K'}$-$R^{K'}$ is $(C_2-C_{40})$alkylene. More preferably, each $R^{K'}$- $R^{L'}$ independently is $(C_{12}-C_{18})$arylene and the $R^{K'}$-$R^{K'}$ is $(C_2-C_{10})$alkylene. Still more preferably, the $R^{K'}$- $R^{K'}$ is $(C_2-C_6)$alkylene and each $R^{K'}$-$R^{L'}$ independently is a $(C_{18})$arylene. Preferably, each $(C_{18})$arylene is a mono($R^S$)- or, more preferably, poly($R^S$)-substituted $(C_{18})$arylene, the $R^S$ being as defined for formula (I) in the first embodiment. The term "poly($R^S$)" means that two or more H, but not all H, bonded to carbon atoms of a corresponding unsubstituted group (e.g., in the present case an unsubstituted $(C_{18})$arylene) independently are replaced by an $R^S$ substituent in the poly($R^S$)-substituted $(C_{18})$arylene. Preferably each $R^S$ of the mono($R^S$)- or poly($R^S$)-substituted $(C_{18})$arylene independently is an unsubstituted $(C_1-C_{18})$alkyl, more preferably an unsubstituted $(C_1-C_{10})$alkyl, and still more preferably an unsubstituted $(C_1-C_6)$alkyl. An example of the unsubstituted $(C_{18})$arylene is 1,3-diphenylbenzene-2,2'-diyl.

In some embodiments employing the metal-ligand complex of formula (I), (Ia), (Ib), (Ic), or (Id), at least one and more preferably each $L^1$ and $L^2$ independently is $(C_1-C_4)$alkyl. In some embodiments, at least one and more preferably each $L^1$ and $L^2$ independently is $(C_5-C_{10})$alkyl. In some embodiments, at least one and more preferably each $L^1$ and $L^2$ independently is $(C_{11}-C_{20})$alkyl. In some embodiments, at least one and more preferably each $L^1$ and $L^2$ independently is $(C_{21}-C_{40})$alkyl.

US 2004/0010103 generally teaches other suitable tetradentate ligands useful in preparing the metal-ligand complex of formula (Id) and methods of preparing the same.

In some embodiments, the aforementioned metal-ligand complex of formula (I) that is employed in the preparation of the catalyst of the first embodiment is a metal-ligand complex of formula (Ie):

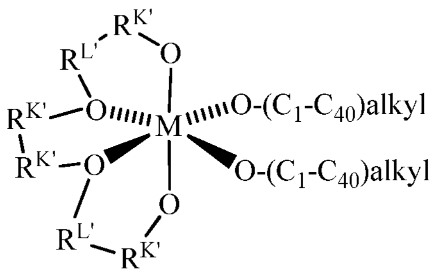

(Ie)

wherein $R^{K'}$- $R^{L'}$ and $R^{K'}$- $R^{K'}$ are as defined for formula (Id). Preferably in formula (Ie), each $(C_2-C_{40})$alkyl for $L^1$ and $L^2$ independently is $(C_1-C_{20})$alkyl.

In some embodiments, the aforementioned metal-ligand complex of formula (I) that is employed in the preparation of the catalyst of the first embodiment is a metal-ligand complex of formula (If):

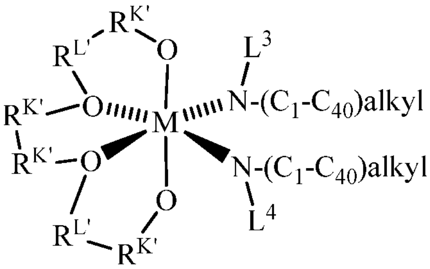

(If)

wherein $R^{K'}$- $R^{L'}$ and $R^{K'}$- $R^{K'}$ are as defined for formula (Id).

In the metal-ligand complex of formula (Id), (Ie), or (If), more preferably, each $R^{K'}$- $R^{L'}$ independently is $(C_6$-$C_{40})$arylene and the $R^{K'}$- $R^{K'}$ is $(C_2$-$C_{40})$alkylene, the $(C_6$-$C_{40})$arylene and $(C_2$-$C_{40})$alkylene independently being unsubstituted or substituted with from 1 to 5 of the substituents $R^S$. Still more preferably, each $(C_6$-$C_{40})$arylene independently is a $(C_{12}$-$C_{18})$arylene and the $R^{K'}$- R is $(C_2$-$C_6)$alkylene. Even more preferably, each $(C_{12}$-$C_{18})$arylene independently is a $(C_{18})$arylene substituted with from 3 to 5 substituents $R^S$, each $R^S$ independently being a $(C_1$-$C_4)$alkyl; and the $R^{K'}$-$R^{K'}$ is an unsubstituted $(C_2$-$C_6)$alkylene.

More preferred is the metal-ligand complex of formula (I) employed in any one of the Examples described later.

In the metal-ligand complex of formula (I), the $R^KOR^L$ or -$R^KOR^L$- are examples of the neutral ligand. The term "neutral ligand" means a compound comprising a Lewis base functionality, the Lewis base functionality being bonded to M via a dative bond. The term "dative bond" is also known as a coordinate valence or coordinate bond.

Preferably, the metal-ligand complex of formula (I), (Ia), (Ib), (Ic), (Id), (Ie), or (If), and more preferably the metal-ligand complex of formula (Ib), and still more preferably the metal-ligand complex of formula (Ie) wherein each $(C_2$-$C_{40})$alkyl for $L^1$ and $L^2$ independently is $(C_1$-$C_{20})$alkyl is characterized as having a solubility in isopar E of at least 50% higher, and more preferably at least 100% higher than solubility in isopar E of a corresponding non-invention metal-ligand complex of formula (I) wherein each of $X^1$-$L^1$ and $X^2$-$L^2$ is methyl instead of as defined in the first embodiment.

Preferably, the invention catalyst of the first embodiment comprising or prepared from the metal-ligand complex of formula (I), (Ia), (Ib), (Ic), (Id), (Ie), or (If), and more preferably the metal-ligand complex of formula (Ia), is characterized as having a catalyst efficiency of greater than 5,000,000, more preferably greater than 9,000,000, and still more preferably greater than 13,000,000, wherein the catalyst efficiency is calculated by dividing the number of grams of polyolefin (e.g., polyethylene) prepared by the process of the third embodiment by the number of grams of the metal (i.e., M, which comprises the metal complex of formula (I)) employed therein.

Preferably, the metal-ligand complex of formula (I), (Ia), (Ib), (Ic), (Id), (Ie), (If), and more preferably the metal-ligand complex of formula (Ib), and still more preferably the metal-ligand complex of formula (Ie) wherein each $(C_2$-$C_{40})$alkyl for $L^1$ and $L^2$ independently is $(C_1$-$C_{20})$alkyl is characterized as having both the aforementioned higher solubility and higher catalyst efficiency.

Illustrative procedures for preparing metal-ligand complexes of formula (I) are shown in Schemes 1 and 2 that follow.

Scheme 1.

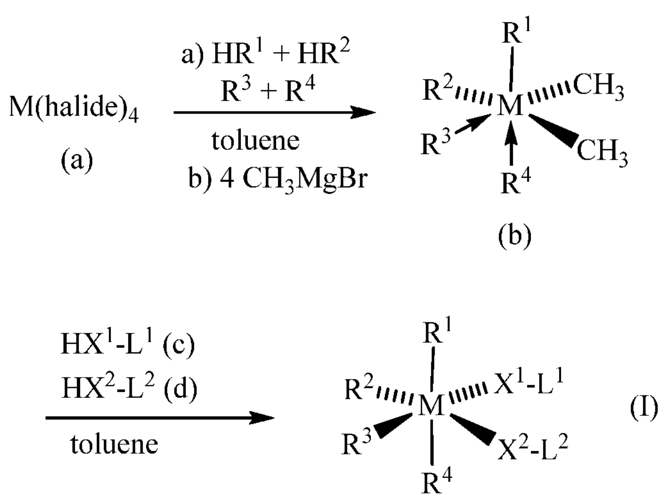


(a)

(b)

(I)

Scheme 1 illustrates a preferred preparation of the metal-ligand complex of formula (I) wherein M, $R^1$ to $R^4$, $X^1$, $X^2$, $L^1$, and $L^2$ are as defined previously for the first embodiment. In Scheme 1, the preparation starts with reaction of a metal tetrahalide of formula (a) (e.g., $HfCl_4$) with 1 mole equivalent each of $HR^1$ and $HR^2$, the conjugate acids of the anionic ligands $-R^1$ and $-R^2$, and with1 mole equivalent each of the neutral ligands $R^3$ and $R^4$, followed by reaction of the resulting mixture (i.e., after step a)) with 4 mole equivalents of methyl magnesium bromide to give the dimethyl metal complex of formula (b). Reaction of the dimethyl metal complex of formula (b) with sources $HX^1$-$L^1$ of formula (c) and $HX^2$-$L^2$ of formula (d) respectively of ligands $X^1$-$L^1$ and $X^2$-$L^2$ yields the metal-ligand complex of formula (I) described in the first embodiment. Reaction conditions for each reaction shown in Scheme 1 independently are the same or different and preferably independently are in an aprotic solvent such as, for example, toluene (or benzene, xylenes, or other aprotic non-Lewis base solvent) under an inert gas atmosphere (e.g., nitrogen, argon, or helium gas) at a temperature of from -30 degrees Celsius (°C) to 100 °C, preferably about 25 °C, followed by using the resulting reaction product directly in the next step or isolating, if desired, of the resulting reaction product from the resulting reaction mixture under inert gas atmosphere.

Scheme 2.

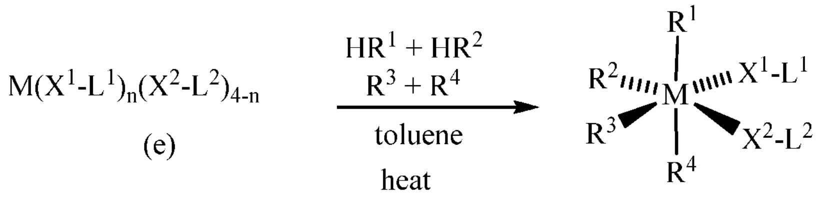


(I)

Scheme 2 illustrates another preferred preparation of the metal-ligand complex of formula (I) wherein M, $R^1$ to $R^4$, $X^1$, $X^2$, $L^1$, and $L^2$ are as defined previously for the first embodiment and n is an integer of from 0 to 4. In Scheme 2, the preparation starts with a metal complex of formula (e) having from 1 to 3 ligands $-X^1$-$L^1$ and, respectively, from 3 to 1 ligands $-X^2$-$L^2$, where $X^1$, $X^2$, $L^1$, and $L^2$ are as defined previously for the first embodiment, and more preferably X and $X^2$ are the same and $L^1$ and $L^2$ are the same. The metal complex of formula (e) is reacted with 1 mole equivalent of each of HR and $HR^2$, the conjugate acids of the anionic ligands -R and $-R^2$, and with1 mole equivalent of each of neutral ligands $R^3$ and $R^4$ to give the metal-ligand complex of formula (I) wherein M, $R^1$ to $R^4$, $X^1$, $X^2$, $L^1$, and $L^2$ are as defined previously for the first embodiment, and more preferably X and $X^2$ are the same and L and $L^2$ are the same. Reactions conditions for the preparation of Scheme 2 independently are as previously described for Scheme 1.

The catalyst of the first embodiment may be prepared from the metal-ligand complex of formula (I), alkylaluminum, and boron-containing ionic compound according to the process of the second embodiment. The process of the second embodiment is carried out under catalyst preparing conditions useful for the process of the second embodiment. The phrase "catalyst preparing conditions" " independently refers to reaction conditions such as solvent(s), atmosphere(s), temperature(s), pressure(s), time(s), and the like that are preferred for giving the invention catalyst from the process of the second embodiment. Preferably, the process of the second embodiment independently is run under an inert atmosphere (e.g., under an inert gas consisting essentially of, for example, nitrogen gas, argon gas, helium gas, or a mixture of any two or more thereof). Preferably, the process of the second embodiment is run with an aprotic solvent or mixture of two or more aprotic solvents, e.g., toluene. Preferably, the process of the second embodiment is run as a reaction mixture comprising reaction ingredients mentioned in the second embodiment (i.e., the metal-ligand complex of formula (I), alkylaluminum, and boron-containing ionic compound); and the aprotic solvent. The reaction mixture may comprise additional ingredients. Preferably, the process of the second embodiment is run at a temperature of the reaction mixture of from -20 °C to about 200 °C. In some embodiments, the temperature is at least 0 °C, and more preferably at least 20 °C. In other embodiments, the temperature is 100 °C or lower, more preferably 50 °C or lower, and still more preferably 40 °C or lower. A convenient temperature is about ambient temperature, i.e., from about 20 °C to about 30 °C. Preferably the process of the second embodiment independently is run at ambient pressure, i.e., at about 1 atm (e.g., from about 95 kPa to about 107 kPa, such as 101 kPa).

MATERIALS AND METHODS

General Considerations

All solvents and reagents are obtained from commercial sources and used as received unless indicated otherwise. Purify hexanes solvent through a column of activated alumina followed by a column of Q5 copper oxide on alumina (Cu-0226 S is obtained from (Engelhard subsidiary of BASF Corporation). Purify tetrahydrofuran (THF) and diethyl ether through columns of activated alumina. Synthesize and store all metal complexes in a Vacuum Atmospheres

inert atmosphere glove box under a dry nitrogen atmosphere. Record nuclear magnetic resonance (NMR) spectra on a 300 megahertz (MHz) Varian INOVA spectrometer. Report chemical shifts in parts per million (δ) versus tetramethylsilane and referenced to residual protons in a deuterated solvent.

Determining percent incorporation of 1-octene and polymer density by Infrared (IR) Spectroscopy: Deposit 140 microliters (μL) of each polymer solution onto a silica wafer, heat at 140 °C until the 1,2,4-trichlorobenzne (TCB) evaporates, and analyze using a Nicolet Nexus 670 FT-IR with 7.1 version software equipped with an AutoPro auto sampler.

Gel permeation chromatography (GPC):

Determine weight average molecular weight ($M_w$) and polydispersity index: Determine $M_w$ and ratio of $M_w/M_n$ (polydispersity index or PDI) using a Polymer Labs™ 210 high temperature gel permeation chromatograph. Prepare samples using 13 mg of polyethylene polymer that is diluted with 16 mL of 1,2,4-trichlorobenzene (stabilized with butylated hydroxy toluene (BHT)), heat and shake at 160 °C for 2 hours.

Determining melting and crystallization temperatures and heat of fusion by Differential Scanning Calorimetry (DSC; DSC 2910, TA Instruments, Inc.)): First heat samples from room temperature to 180 °C at a heating rate of 10 °C per minute. After being held at this temperature for 2 to 4 minutes, cool the samples to -40 °C at a cooling rate of 10 °C per minute; hold the sample at the cold temperature for 2 to 4 minutes, and then heat the sample to 160 °C.

Analyze end groups by proton- nuclear magnetic resonance ($^1$H-NMR) spectroscopy using a Varian 600 MHz NMR instrument and deuterated tetrachloroethane.

Abbreviations (meanings): °C (degrees Celsius); Ac (acetyl); Bn (benzyl); n-Bu (normal-butyl); t-Bu (tertiary-butyl, also known as 1,1-dimethylethyl); DME (1,2-dimethoxyethane); Et (ethyl); g (gram(s)); Hz (Hertz); i-Pr (isopropyl); kPa (kilopascals); Me (methyl); μL (microliter(s)); μmol (micromole(s)); mL (milliliter(s)); mmol (millimole(s)); MHz (MegaHertz); Pd/C (palladium on carbon); Ph (phenyl); PPTs (pyridinium-para-toluenesulfonate); psi (pounds per square inch); r.t. (room temperature); THF (tetrahydrofuran); THP (tetrahydropyran); Ts (para-toluenesulfonyl); wt% (weight percent).

General Procedure 1: copolymerization of ethylene and an alpha-olefin (e.g., 1-octene) to give a poly(ethylene 1-octene) copolymer

Use a 2-liter Parr reactor in the polymerizations. The reactor has an internal cooling coil (for, e.g., circulating a chilled glycol) and a bottom portion fitted with a dump valve. Heat the reactor with an electrical heating mantle. Control the heating and cooling of the reactor with a Camile TG process computer. Pass all feeds through columns of alumina and Q-5™ catalyst (available from Englehardt Chemicals Inc.) prior to introduction into the reactor. Handle solutions of metal-ligand complexes (MLCs) and activating cocatalysts (e.g., alkylaluminum and boron-containing ionic compound) under an inert atmosphere (e.g., nitrogen gas) in a glove box.

Charge a stirred 2-liter reactor with about 663 g of mixed alkanes solvent (Isopar E) and 125 g of 1-octene comonomer. Add hydrogen gas (45 psi) as a molecular weight control agent by differential pressure expansion from a 75 mL addition tank at 300 psi (2070 kiloPascals (kPa)). Heat resulting contents of the reactor to a set temperature of 160 °C (other set temperatures may be used) and saturate with ethylene at 460 psig to 470 psig (3.4 MPa). Meanwhile in a glove box, mix metal-ligand complex and cocatalyst(s) in an appropriate amount of toluene to give a catalyst solution having a desired concentration (molarity). When employing the alkylaluminum and boron-containing ionic compound cocatalysts, first mix the metal-ligand complex and alkylaluminum in toluene at a temperature of from 20 °C to 100 °C (e.g., 70 °C) to give a penultimate solution, wait for a contact time period (e.g., 10 minutes to 60 minutes), and then add the boron-containing ionic compound to the penultimate solution to give the catalyst solution. Transfer the catalyst solution to a catalyst addition tank, and then inject it into the reactor to give a reaction mixture. Observe temperature of the reaction mixture for exotherm and decreasing pressure. Maintain polymerization conditions (e.g., pressure and temperature) for 15 minutes with ethylene added on demand. Continuously remove heat from the reaction mixture through the internal cooling coil. Remove the resulting solution from the reactor, quench the reaction by adding isopropyl alcohol to the reactor, and stabilize the resulting quench by dumping the reactor contents through the dump valve into a container having 10 mL of a toluene solution containing approximately 67 mg of a hindered phenol antioxidant (IRGANOX™ 1010 from Ciba Geigy Corporation) and 133 mg of a phosphorus stabilizer (IRGAFOS™ 168 from Ciba Geigy Corporation). Pour the resulting quenched and stabilized mixture into preweighed trays and dry the collected material for about 12 hours in a temperature ramped vacuum oven with a final set point of 140 °C to 145 °C to give the poly(ethylene 1-octene).

Between polymerization runs conduct a wash cycle in which 850 g of mixed alkanes (Isopar E) are added to the reactor and the reactor is heated to 150 °C. Empty the heated solvent from the reactor immediately before beginning a new polymerization run.

Melting and crystallization temperatures of polymers (P1) to (PX) are measured by DSC (DSC 2910, TA Instruments, Inc.). Samples of (P1) to (PX) are first heated from room temperature to 210 °C at 10 °C per minute. After being held at this temperature for 4 minutes, the samples are cooled to -40 °C at 10 °C per minute and are then heated to 215 °C at 10 °C per minute after being held at -40 °C for 4 minutes.

Molecular weights of polymers (P1) to (PX) are measured either on Symyx Technologies, Inc.'s SYMYX™ High-Throughput Gel Permeation Chromatographer (SHT-GPC) or Viscotek HT-350 Gel Permeation Chromatographer (V-GPC). The SHT-GPC utilized two Polymer Labs PLgel 10μm MIXED-B columns (300x10mm) at a flow rate of 2.5 mL/minute in 1,2,4-Trichlorbenzene at 160 °C. The V-GPC is equipped with a low-angle/right-angle light scattering detector, a 4-capillary inline viscometer and a refractive index detector. V-GPC analyses utilized three Polymer Labs PLgel 10μm MIXED-B columns (300mmx7.5mm) at a flow rate of 1.0 mL/minute in 1,2,4-trichlorbenzene at either 145 °C or 160 °C.

Sample preparation for SHT-GPC: In a sample block, polymer sample is weighed out into glass sample tubes (Symyx Technologies) and diluted to 30mg/mL in 1,2,4-Trichlorobenzene (1,2,4-TCB). A glass stir bar is placed into each tube and the sample block is transferred to a heated shaker (160 °C, 220RPM) for 1 hour. Visual inspection of dissolution/sample viscosity is made, and solvent (1,2,4-TCB) is added to those which have not fully dissolved, or which are too thick for the SHT-GPC. The sample block is returned to the shaker for 15 minutes, and then transferred to the sample deck of the SHT-GPC, which is heated at 140 °C. The samples are diluted by transferring a small aliquot of the 30 mg/mL solution into a second tube and adding solvent (1,2,4-TCB) to reach the desired concentration of 1 mg/mL, of which 500 μL are then injected into the GPC.

Sample preparation for V-GPC: Polymer is weighed out into glass test-vials using the Semi-Automated Sample Preparation (SASP) program supplied by Viscotek, Inc. Once weighed out, 1,2,4-Trichlorobenzene is added to each sample by a computer-controlled syringe pump interfaced with the SASP program to give 1.00 mg/mL concentration. A Teflon-coated stir bar is placed into each and the tubes are capped and loaded into an aluminum block and placed on a heated shaker (160 °C, 220RPM) for 1 hour to 2 hours until total dissolution is observed upon visual inspection. The vials are then transferred to the heated deck of the autosampler (145 °C with magnetic stirring) where they await injection. A 270 μL injection of each sample is made, with a run time of 45 minutes.

PREPARATIONS AND COMPARATIVE EXAMPLES

Preparation 1: preparation of (non-invention) metal-ligand complex (1)

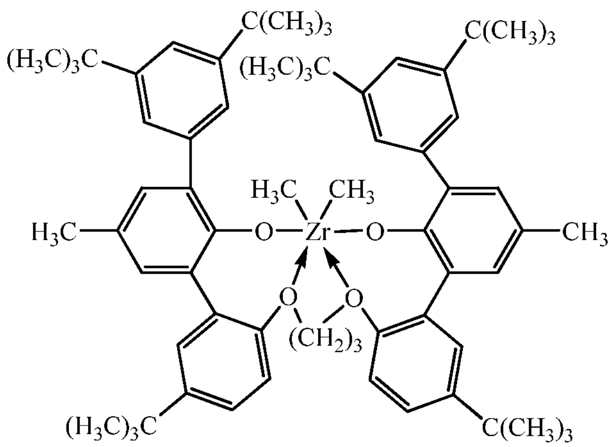

(1)

Step (a): preparation of ligand of formula (1a):

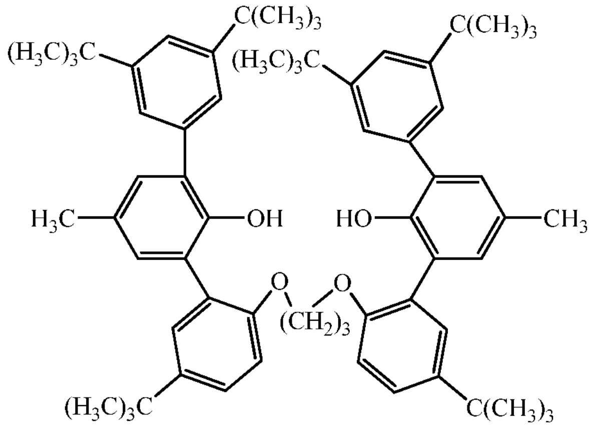

(1a)

Follow the procedure for the preparation of "Ligand LL2" as described in US 2004/0010103 A1 (see Example 11 and procedures referenced therein) and outlined below in Scheme 3, except instead of starting from 2-bromophenol to prepare 2-(O-THP)-phenylboronic acid diisopropyl ether (see "BB20," ,Scheme A3 of US 2004/0010103 A1), use instead 2-bromo-4-(1,1-dimethylethyl)-phenol having Chemical Abstracts Service Registry Number (CAS RegNo.) [2198-66-5] to prepare 2-(O-THP)-5-(1,1-dimethylethyl)-phenylboronic acid diisopropyl ether (If) as shown below in Scheme 3.

Scheme 3

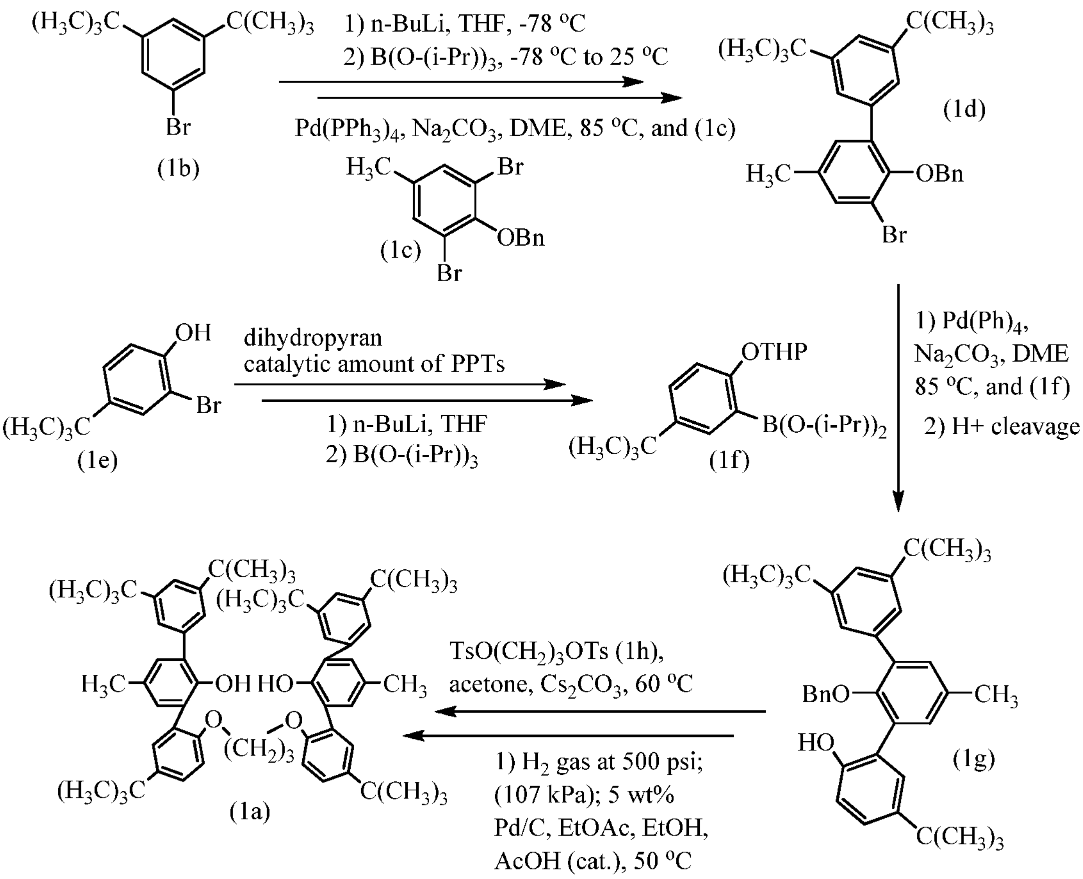


In Scheme 3, 3,5-bis(1,1-dimethylethyl)-bromobenzene (1b) has CAS RegNo. [22385-77-9] and may be purchased from Sigma-Aldrich Company, Saint Louis, Missouri, USA (catalog number 592161). 2-(Benzyloxy)-1,3-dibromo-5-methylbenzene (1c) (see also Scheme A2 of US 2004/0010103 A1) may be purchased from Sigma-Aldrich Co. (catalog number S52664) or is readily prepared by contacting benzyl bromide with 2,6-dibromo-4-methylphenol (CAS RegNo. [2432-14-6] purchased from Sigma-Aldrich under catalog number S132845) in the presence of a non-nucleophilic base

such as, for example, cesium carbonate, sodium hydride, or triethylamine. 2-Bromo-4-(1,1-dimethylethyl)phenol (1e) has CAS RegNo. [2198-66-5] and may be prepared by brominating 4-(1,1-dimethylethyl)phenol, CAS RegNo. [98-54-4], which is available from The Dow Chemical Company, Midland, Michigan, USA. 1,3-Propane-diol bis(toluenesulfonate) has CAS RegNo. [5469-66-9] and may be purchased from Sigma-Aldrich Co. under catalog number 317551 or prepared by contacting 1,3-propanediol and 2 mole equivalents of para-toluenesulfonyl chloride in dichloromethane in the presence of a non-nucleophilic base (described previously). Alternatively, 1,3-dibromopropane may be substituted for 1,3-Propane-diol bis(toluenesulfonate) in the synthesis of the ligand of formula (1a), 1,3-dibromopropane having CAS RegNo. [109-64-8] and may be purchased from Sigma-Aldrich Co. under catalog number 125903.

Step (b): preparation of metal-ligand complex (1)

Combine zirconium(IV) chloride and 4 mole equivalents of methyl lithium in toluene at room temperature under an inert gas (e.g., nitrogen gas), add an equal mole amount of the ligand of formula (1a) from step (a) of this preparation, stir for 10 minutes at room temperature, and remove toluene to give the metal-ligand complex (1).

Preparation 2: preparation of metal-ligand complex (2)

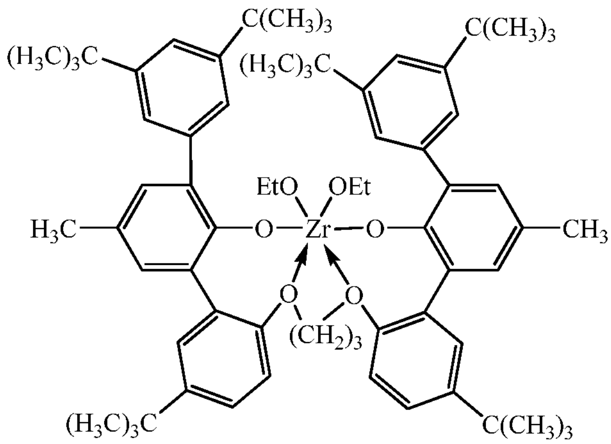

(2)

Dissolve the metal-ligand complex (1) of Preparation 1 in 6 mL of toluene. To this solution add 49 microliters (μL) of ethanol. After stirring the resulting reaction mixture for 2 hours at room temperature, a small amount of a white crystalline solid appears. Remove a 0.5 mL aliquot of liquid from the reaction mixture and evaporate solvent from the aliquot. Dissolve part of the resulting residue in $d_6$-benzene ($C_6D_6$), and confirm NMR spectra (proton-NMR and carbon13-NMR) is consistent with the metal-ligand complex (2) of Preparation 2. Return the $C_6D_6$ to the reaction mixture, and remove solvent under reduced pressure to give a colorless solid. To this colorless solid add 3 mL of toluene followed by 9 mL of hexane to give a suspension containing crystalline white solid. After stirring for 2 hours at room temperature, collect a white solid on a sintered glass funnel, wash the resulting filtercake with hexane and dry it under reduced pressure to give 0.202 g of the metal-ligand complex (2) of Preparation 2. NMR spectra (proton and carbon) are consistent with the structure of the metal-ligand complex (2) of Preparation 2.

Comparative Example (CE) 1: preparation of a catalyst with the metal-ligand complex (1) of Preparation 1 and bis(octadecyl)methylammonium tetrakis(pentafluorophenyl)borate (BOMATPB)

Add the metal-ligand complex (1) of Preparation 1 (0.05 μmol) and BOMATPB (0.06 μmol) to toluene (10 mL) under an inert atmosphere (glove box) to give a toluene solution containing the catalyst of Comparative Example 1.

Comparative Example (CE) 2: polymerization of ethylene and 1-octene with the catalyst of Comparative Example 1 to give a poly(ethylene 1-octene) copolymer

Follow the General Procedure 1 described previously employing the toluene solution of the catalyst of Comparative Example 1 and Isopar E solvent. Results are shown later in Table 1.

EXAMPLES OF THE PRESENT INVENTION

Examples 1A to 1E: preparation of invention catalysts with the metal-ligand complex (2) of Preparation 2, trimethylaluminum ($Al(CH_3)_3$), and bis(octadecyl)methylammonium tetrakis(pentafluorophenyl)borate (BOMATPB)

Add the metal-ligand complex (2) of Preparation 2 (0.05 μmol) and, trimethylaluminum in amounts as follow: A), B), or D) 2.5 μmol, C) 5 μmol, or E) 0.5 μmol as indicated later in Table 1) to toluene (10 mL) under an inert atmosphere (glove box) and stir for either A) and B) 60 minutes or C) to E) 10 minutes (as indicated later in Table 1) and at a temperature of either A) 25 °C or B) to E) 70 °C (as indicated later in Table 1), then add BOMATPB (0.06 μmol), and continue stirring to give a toluene solution containing the respective catalysts of Examples 1A to 1E.

Examples 2A to 2E: polymerization of ethylene and 1-octene using the respective catalysts of Examples 1A to 1E to give poly(ethylene 1-octene) copolymers

Follow the General Procedure 1 described previously five times, each time using a different one of the toluene solutions of the catalysts of Examples 1A to 1E to give poly(ethylene 1-octene) copolymers of Examples 2A to 2E, respectively. Results are shown below in Table 1.

Table 1: Ethylene/1-octene Copolymerization Reactions

| (CE) Ex. No. | MLC Prep. No. | Alkyl-Al (μmol) | MLC/Alkyl-Al Contact Time (min.) and Temp. (°C) | B-contain. Ionic cpd. (μmol) | Cat. (CE) Ex. No. | Exo-therm of Polymer Reaction (°C) | Weight of Ethylene added (g) | Yield of HDPE (g) | Catalyst Efficiency (gHDPE/gMLC) |
|---|---|---|---|---|---|---|---|---|---|
| (CE2) | 1 | None | None | BOMATPB (0.06) | (CE1) | 2.8 | 26 | 29.2 | 6,401,800 |
| 2A | 2 | $Al(CH_3)_3$ (2.5) | 60 min. 25 °C | BOMATPB (0.6) | 1A | 2 | 23.6 | 25.8 | 5,656,400 |
| 2B | 2 | $Al(CH_3)_3$ (2.5) | 60 min. 70 °C | BOMATPB (0.6) | 1B | 3.7 | 47.4 | 62.8 | 13,768,300 |
| 2C | 2 | $Al(CH_3)_3$ (5) | 10 min. 70 °C | BOMATPB (0.6) | 1C | 4.3 | 53.7 | 64.8 | 14,206,800 |
| 2D | 2 | $Al(CH_3)_3$ (2.5) | 10 min. 70 °C | BOMATPB (0.6) | 1D | 5.4 | 55.6 | 63.7 | 13,965,600 |
| 2E | 2 | $Al(CH_3)_3$ (0.5) | 10 min. 70 °C | BOMATPB (0.6) | 1E | 5.3 | 50.7 | 43.2 | 9,471,200 |

- Polymer. (CE) Ex. No. = Polymerization Reaction (Comparative Example) Example Number;
- MLC Prep. No. = metal-ligand complex Preparation number;
- Alkyl-Al (μmol) = alkylaluminum (micromoles);
- MLC/Alkyl-Al Contact Time (min.) and Temp. (°C) = contact time in minutes of the metal-ligand complex (2) of Preparation 2 to the Alkyl-Al before adding the B-contain. Ionic cpd. and temperature of the contacting in degrees Celsius;
- B-contain. Ionic cpd. (μmol) means the boron-containing ionic compound (micromoles); Exotherm of Polymer. Reaction (°C) = temperature rise of polymerization reaction in degrees Celsius;
- Cat. (CE) Example No. = catalyst Preparation (Comparative Example) Example Number;
- Exotherm of Polymer. Reaction (°C) = the rise in temperature observed upon addition of catalyst to the penultimate solution of 1-octene in Isopar E.
- Weight of ethylene added (g) = weight of ethylene added in reaction in grams;
- Yield of HDPE (g) = yield of high density polyethylene in grams;
- Catalyst Efficiency (gHDPE/gMLC) = catalyst efficiency calculated by dividing weight of high density polyethylene (HDPE) product by weight of metal-ligand complex (MLC).

As shown by the Examples of the present invention, the invention catalysts are useful for polymerizing olefins, including mixtures of two or more olefin monomers, to give polyolefins. The invention catalysts comprising or prepared from the metal-ligand complex of formula (I), alkylaluminum and boron-containing ionic compound generally have higher catalyst efficiencies and higher solubilities in alkanes solvents than their non-invention dimethyl-M comparators.

While the invention has been described above according to its preferred embodiments, it can be modified within the spirit and scope of this disclosure. This application is therefore intended to cover any variations, uses, or adaptations of the instant invention using the general principles disclosed herein. Further, the instant application is intended to cover such departures from the present disclosure as come within the known or customary practice in the art to which this invention pertains and which fall within the limits of the following claims.

## Claims

1. A catalyst prepared with one or more metal-ligand complexes , an alkylaluminum and a boron-containing ionic compound, preparation of the catalyst comprising steps of contacting the one or more metal-ligand complexes to the alkylaluminum to produce an intermediate derivative therefrom; and then contacting the intermediate derivative to the boron-containing ionic compound to produce the catalyst; each contacting step being performed under independent catalyst preparing conditions ; the boron-containing ionic compound comprising a cation and a boron-containing anion; the ratio of total number of moles of the alkylaluminum to total number of moles of the one or more metal-ligand complexes being from 1:1 to 100:1; and the ratio of total number of moles of the boron-containing ionic compound to the total number of moles of the one or more metal-ligand complexes being from 1:1 to 5:1; and the metal-ligand complex being a metal-ligand complex of formula (I):

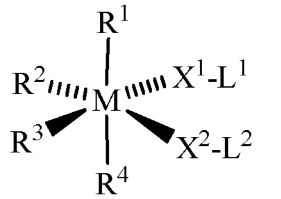

(I)

wherein:

M is titanium, zirconium, or hafnium;
$X^1$ is O, N(H), or N($L^3$);
$X^2$ is O, N(H), or N($L^4$);
Each of L1 $^1$ and $L^2$ independently is ($C_1$-$C_{40}$)hydrocarbyl;
Each of $L^3$ and $L^4$ independently is ($C_1$-$C_{40}$)hydrocarbyl; or $L^3$ is taken together with $L^1$ to form a ($C_2$-$C_{40}$)alkylene, $L^4$ is taken together with $L^2$ to form a ($C_2$-$C_{40}$)alkylene, $L^3$ is taken together with $L^4$ to form a ($C_2$-$C_{40}$)alkylene, or any combination thereof;
Each of -$X^1$-$L^1$ and -$X^2$- $L^2$ being an anion having a formal oxidation state of -1;
Two of $R^1$, $R^2$, $R^3$, and $R^4$ independently are neutral ligands and the other two of $R^1$, $R^2$, $R^3$, and $R^4$ independently are anionic ligands, each neutral ligand independently being $R^MNR^KR^L$, $R^KOR^L$, $R^KSR^L$, or $R^MPR^KR^L$, wherein each $R^K$, $R^L$, and $R^M$ independently is hydrogen, ($C_1$-$C_{40}$)hydrocarbyl, or ($C_1$-$C_{40}$)heterohydrocarbyl, or any $R^K$ and $R^L$, or any two $R^K$, the $R^K$ and $R^L$ or two $R^K$ being of a same or different ligand, independently are taken together to form a ($C_2$-$C_{40}$)hydrocarbylene or ($C_1$-$C_{40}$)heterohydrocarbylene, and any remaining $R^K$ and $R^L$ are as defined above; and each anionic ligand independently having a formal oxidation state of -1 and independently being $R^K$-P=$N^-$, $(R^K)_2C$=$N^-$, $R^KR^LN^-$, $R^KO^-$, $R^KS^-$, $R^KR^LP^-$, or $R^MR^KR^LSi^-$, wherein each $R^K$, $R^L$, and $R^M$ independently is as defined above; where $R^1$, $R^2$, $R^3$, and $R^4$ are selected depending on the formal oxidation state of M such that the metal-ligand complex of formula (I) is, in aggregate, neutral;
Each of the aforementioned ($C_2$-$C_{40}$)alkylene, ($C_1$-$C_{40}$)hydrocarbyl, ($C_1$-$C_{40}$)heterohydrocarbyl, ($C_2$-$C_{40}$)hydrocarbylene, and ($C_1$-$C_{40}$)heterohydrocarbylene independently are the same or different and independently is unsubstituted or substituted with one or more substituents $R^S$; and
Each $R^S$ independently is halo, polyfluoro, perfluoro, unsubstituted ($C_1$-$C_{18}$)hydrocarbyl, $F_3C$-, $FCH_2O$-, $F_2HCO$-, $F_3CO$-, oxo (i.e., =O), $R_3Si$-, RO-, RS-, RS(O)-, $RS(O)_2$-, $R_2P$-, $R_2N$-, $R_2C$=N-, NC-, RC(O)O-, ROC(O)-, RC(O)N(R)-, or $R_2NC(O)$-, wherein each R independently is an unsubstituted ($C_1$-$C_{18}$)hydrocarbyl.

2. The catalyst as in claim 1, wherein in the metal-ligand complex of formula (I), each of X $^1$ and $X^2$ is O, thereby the

metal-ligand complex of formula (I) being a metal-ligand complex of formula (Ia):

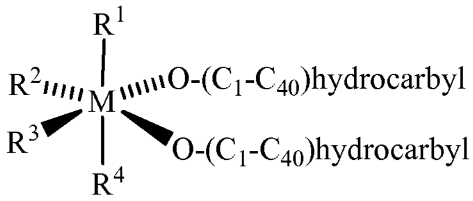

(Ia)

.

3. The catalyst as in claim 1, wherein in the metal-ligand complex of formula (I), $X^1$ is $N(L^3)$ and $X^2$ is $N(L^4)$, thereby the metal-ligand complex of formula (I) being a metal-ligand complex of formula (Ic):

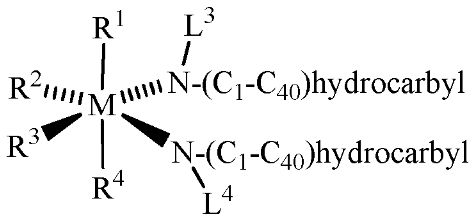

(Ic)

.

4. The catalyst as in any one of claims 1 to 3, wherein each of two of $R^1$ to $R^4$ independently is $R^KOR^L$ and each of the other two of $R^1$ to $R^4$ independently is $R^KO^-$.

5. The catalyst as in claim 1, wherein each of two of $R^1$ to $R^4$ independently is $R^KOR^L$ and each of the other two of $R^1$ to $R^4$ independently is $R^KO^-$; two $R^K$, one $R^K$ and one $R^L$, and another $R^K$ and $R^L$ being independently taken together with the oxygen atoms to which they are attached, thereby the metal-ligand complex of formula (I) being a metal-ligand complex of formula (Id):

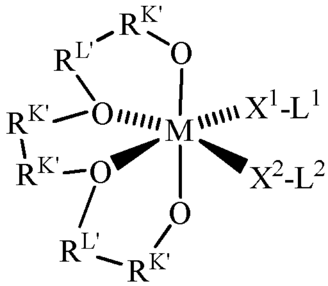

(Id)

,

wherein each $R^{K'}$-$R^{L'}$ and the $R^{K'}$-$R^{K'}$ independently is a $(C_2-C_{40})$hydrocarbylene.

6. The catalyst as in claim 5, wherein in metal-ligand complex of formula (Id), each $X^1$ and $X^2$ is O and $L^1$ and $L^2$ is $(C_1-C_{40})$alkyl, thereby the metal-ligand complex of formula (Id) being a metal-ligand complex of formula (Ie):

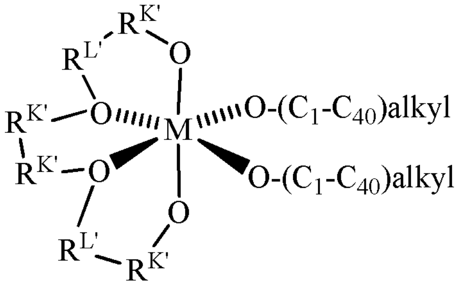

(Ie)

,

wherein each $R^{K'}$-$R^{L'}$ and the $R^{K'}$-$R^{K'}$ independently is a $(C_2-C_{40})$hydrocarbylene.

**7.** The catalyst as in claim 1, wherein each of two of $R^1$ to $R^4$ independently is $R^KOR^L$ and each of the other two of $R^1$ to $R^4$ independently is $R^KO^-$; two $R^K$, one $R^K$ and one $R^L$, and another $R^K$ and $R^L$ are independently taken together with the oxygen atoms to which they are attached, thereby the metal-ligand complex of formula (I) being a metal-ligand complex of formula (If):

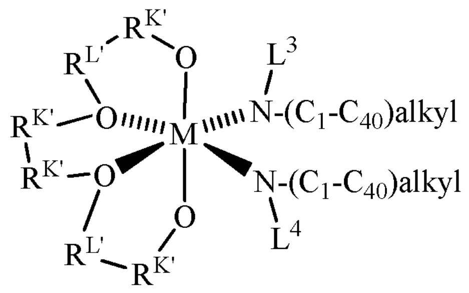

(If)

,

wherein each $R^{K'}$-$R^{L'}$ and the $R^{K'}$-$R^{K'}$ independently is a $(C_2$-$C_{40})$hydrocarbylene.

**8.** The catalyst as in any one of claims 5 to 7, each $R^{K'}$-$R^{L'}$ independently being $(C_6$-$C_{40})$arylene and the $R^{K'}$-R is $(C_2$-$C_{40})$alkylene, the $(C_6$-$C_{40})$arylene and $(C_2$-$C_{40})$alkylene independently being unsubstituted or substituted with from 1 to 5 of the substituents $R^S$.

**9.** The catalyst as in claim 6, each $R^{K'}$-$R^{L'}$ independently being a $(C_{18})$arylene substituted with from 3 to 5 of the substituents $R^S$, each $R^S$ independently being a $(C_1$-$C_4)$alkyl; and the $R^{K'}$-$R^{K'}$ being an unsubstituted $(C_2$-$C_6)$alkylene, thereby the metal-ligand complex of formula (Ie) being a metal-ligand complex of formula:

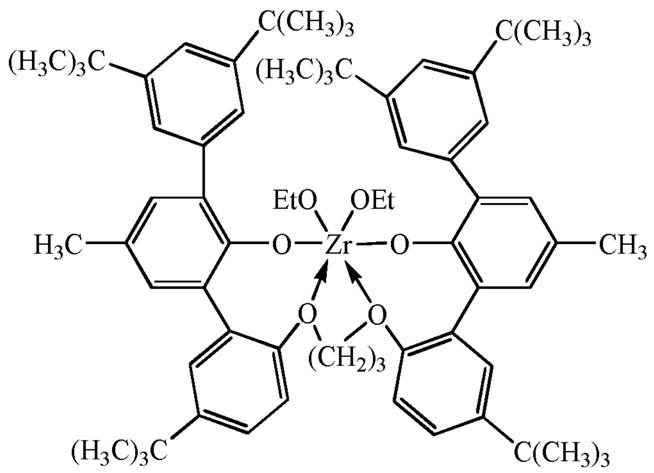

,

wherein each Et is ethyl.

**10.** The catalyst as in any one of the preceding claims, each alkylaluminum independently being a monoalkylaluminum dihydride, monoalkylaluminum dihalide, dialkylaluminum hydride, dialkylaluminum halide, or a trialkylaluminum, each alkyl independently being a $(C_1$-$C_{40})$alkyl and each halide independently being fluoride, chloride, bromide, or iodide.

**11.** The catalyst as in any one of the preceding claims, each boron-containing ionic compound independently comprising a cation and a boron-containing anion; the cation comprising an ammonium-type cation or hydrocarbon cation, the ammonium-type cation comprising a nitrogen cation that is a $((C_1$-$C_{20})$hydrocarbyl$)_3N(H)^+$, a $((C_1$-$C_{20})$hydrocarbyl$)_2N(H)_2^+$, or $(C_1$-$C_{20})$hydrocarbyl$N(H)_3^+$, wherein each $(C_1$-$C_{20})$hydrocarbyl independently may be the same or different; and the boron-containing anion comprising a tetra-substituted borate or borane.

**12.** A process for preparing the catalyst as in any one of the preceding claims, the process comprising steps of contacting the one or more metal-ligand complexes of formula (I) to the alkylaluminum to produce the intermediate derivative

therefrom; and then contacting the intermediate derivative to the boron-containing ionic compound to produce the catalyst of claim 1; each contacting step independently being performed under catalyst preparing conditions; the ratio of total number of moles of the alkylaluminum to total number of moles of the one or more metal-ligand complexes being from 1:1 to 100:1; and the ratio of total number of moles of the boron-containing ionic compound to the total number of moles of the one or more metal-ligand complexes being from 1:1 to 5:1.

**13.** A process for polymerizing an olefin, the process comprising a step of contacting together ingredients comprising a catalyst system and an olefin monomer under olefin polymerizing conditions to give a polyolefin, the catalyst system comprising a catalytic amount of the catalyst as in claim 1 and the polyolefin comprising a plurality of repeat units, each repeat unit independently being a residual of the olefin monomer, or a derivative of the residual of the olefin monomer.

**14.** The process as in claim 13, the catalyst system further comprising an associate olefin polymerization catalyst and a chain shuttling agent, the process further employing an olefin comonomer, and the polyolefin being a poly(olefin monomer-olefin comonomer) copolymer.

**15.** The process as in claim 14, the poly(olefin monomer-olefin comonomer) copolymer being a poly(olefin monomer-olefin comonomer) block copolymer.

## Patentansprüche

**1.** Ein mit einem oder mehreren Metall-Ligand-Komplexen, einem Alkylaluminium und einer borhaltigen ionischen Verbindung zubereiteter Katalysator, wobei die Zubereitung des Katalysators die folgenden Schritte beinhaltet: In-Kontakt-Bringen des einen oder der mehreren Metall-Ligand-Komplexe mit dem Alkylaluminium, um ein Zwischenderivat davon zu produzieren; und anschließend In-Kontakt-Bringen des Zwischenderivats mit der borhaltigen ionischen Verbindung, um den Katalysator zu produzieren; wobei jeder Schritt des In-Kontakt-Bringens unter unabhängigen Katalysatorzubereitungsbedingungen durchgeführt wird; die borhaltige ionische Verbindung ein Kation und ein borhaltiges Anion beinhaltet; das Verhältnis der Gesamtzahl an Molen des Alkylaluminiums zur Gesamtzahl an Molen des einen oder der mehreren Metall-Ligand-Komplexe von 1 : 1 bis 100 : 1 beträgt; und das Verhältnis der Gesamtzahl an Molen der borhaltigen ionischen Verbindung zur Gesamtzahl an Molen des einen oder der mehreren Metall-Ligand-Komplexe von 1 : 1 bis 5 : 1 beträgt; und der Metall-Ligand-Komplex ein Metall-Ligand-Komplex der Formel (I) ist:

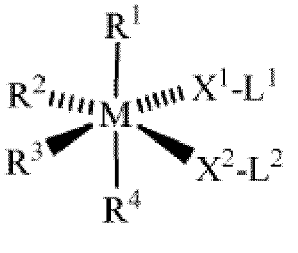

(I)

wobei:

M Titan, Zirkonium oder Hafnium ist;
$X^1$ O, N(H) oder N($L^3$) ist;
$X^2$ O, N(H) oder N($L^4$) ist;
jedes von $L^1$ und $L^2$ unabhängig ($C_1$-$C_{40}$)Hydrocarbyl ist;
jedes von $L^3$ und $L^4$ unabhängig ($C_1$-$C_{40}$)Hydrocarbyl ist; oder $L^3$ mit $L^1$ zusammen genommen wird, um ein ($C_2$-$C_{40}$)Alkylen zu bilden, $L^4$ mit $L^2$ zusammen genommen wird, um ein ($C_2$-$C_{40}$)Alkylen zu bilden, $L^3$ mit $L^4$ zusammen genommen wird, um ein ($C_2$-$C_{40}$)Alkylen zu bilden, oder beliebige Kombination davon;
jedes von $-X^1$-$L^l$ und $-X^2$-$L^2$ ein Anion mit einer formalen Oxidationsstufe von -1 ist;
zwei von $R^1$, $R^2$, $R^3$ und $R^4$ unabhängig neutrale Liganden sind und die anderen zwei von $R^1$, $R^2$, $R^3$ und $R^4$ unabhängig anionische Liganden sind, wobei jeder neutrale Ligand unabhängig $R^MNR^KR^L$, $R^KOR^L$, $R^KSR^L$ oder $R^MPR^KR^L$ ist, wobei jedes $R^K$, $R^L$ und $R^M$ unabhängig Wasserstoff, ($C_1$-$C_{40}$)Hydrocarbyl oder ($C_1$-$C_{40}$)Heterohydrocarbyl oder ein beliebiges $R^K$ und $R^L$ oder beliebige zwei $R^K$ ist, $R^K$ und $R^L$ oder zwei $R^K$ von einem gleichen oder unterschiedlichen Liganden sind, unabhängig zusammen genommen werden, um ein ($C_2$-$C_{40}$)Hy-

drocarbylen oder ($C_1$-$C_{40}$)Heterohydrocarbylen zu bilden, und jedes beliebige verbleibende $R^K$ und $R^L$ wie vorstehend definiert sind; und jeder anionische Ligand unabhängig eine formale Oxidationsstufe von -1 aufweist und unabhängig $R^K$-P=N$^-$, $(R^K)_2$C=N$^-$, $R^KR^LN^-$, $R^KO^-$, $R^KS^-$, $R^KR^LP^-$ oder $R^MR^KR^LSi^-$ ist, wobei jedes $R^K$, $R^L$ und $R^M$ unabhängig wie vorstehend definiert ist; wobei $R^1$, $R^2$, $R^3$ und $R^4$ abhängig von der formalen Oxidationsstufe von M ausgewählt sind, so dass der Metall-Ligand-Komplex von Formel (I) im Aggregat neutral ist; jedes der vorgenannten ($C_2$-$C_{40}$)Alkylen, ($C_1$-$C_{40}$)Hydrocarbyl, ($C_1$-$C_{40}$)Heterohydrocarbyl, ($C_2$-$C_{40}$)Hydrocarbylen und ($C_1$-$C_{40}$)Heterohydrocarbylen unabhängig gleich oder unterschiedlich sind und unabhängig unsubstituiert oder mit einem oder mehreren Substituenten $R^s$ substituiert ist; und
jedes $R^s$ unabhängig Halogen, Polyfluoro, Perfluoro, unsubstituiertes ($C_1$-$C_{18}$)Hydrocarbyl, $F_3C$-, $FCH_2O$-, $F_2HCO$-, $F_3CO$-, Oxo (d. h. =O), $R_3Si$-, RO-, RS-, RS(O)-, $RS(O)_2$-, $R_2P$-, $R_2N$-, $R_2C$=N-, NC-, RC(O)O-, ROC(O)-, RC(O)N(R)- oder $R_2NC(O)$- ist, wobei jedes R unabhängig ein unsubstituiertes ($C_1$-$C_{18}$)Hydrocarbyl ist.

**2.** Katalysator gemäß Anspruch 1, wobei in dem Metall-Ligand-Komplex von Formel (I) jedes von $X^1$ und $X^2$ O ist, dadurch der Metall-Ligand-Komplex von Formel (I) ein Metall-Ligand-Komplex der Formel (Ia) ist:

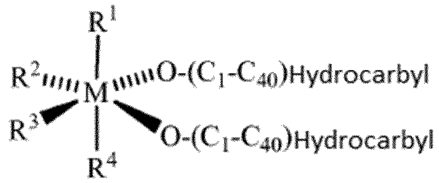

(Ia)

.

**3.** Katalysator gemäß Anspruch 1, wobei in dem Metall-Ligand-Komplex von Formel (I) $X^1$ N($L^3$) ist und $X^2$ N($L^4$) ist, dadurch der Metall-Ligand-Komplex von Formel (I) ein Metall-Ligand-Komplex der Formel (Ic) ist:

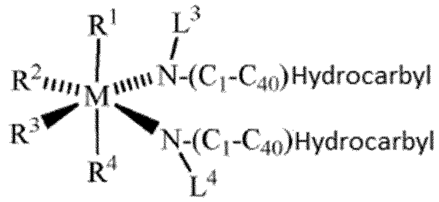

(Ic)

.

**4.** Katalysator gemäß einem der Ansprüche 1 bis 3, wobei jedes von zwei von $R^1$ bis $R^4$ unabhängig $R^KOR^L$ ist und jedes der anderen zwei von $R^1$ bis $R^4$ unabhängig $R^KO^-$ ist.

**5.** Katalysator gemäß Anspruch 1, wobei jedes von zwei von $R^1$ bis $R^4$ unabhängig $R^KOR^L$ ist und jedes der anderen zwei von $R^1$ bis $R^4$ unabhängig $R^KO^-$ ist; zwei $R^K$, ein $R^K$ und ein $R^L$ und ein weiteres $R^K$ und $R^L$ unabhängig mit den Sauerstoffatomen, an welche sie befestigt sind, zusammen genommen werden, dadurch der Metall-Ligand-Komplex von Formel (I) ein Metall-Ligand-Komplex der Formel (Id) ist:

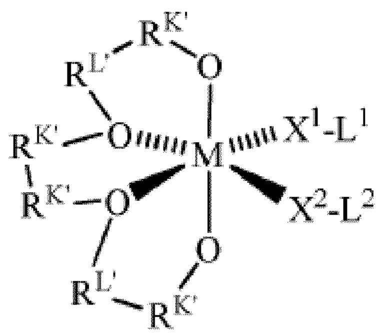

(Id)

,

wobei jedes $R^{K'}$-$R^{L'}$ und der $R^{K'}$-$R^{K'}$ unabhängig ein ($C_2$-$C_{40}$)Hydrocarbylen ist.

**6.** Katalysator gemäß Anspruch 5, wobei in dem Metall-Ligand-Komplex von Formel (Id) jedes von $X^1$ und $X^2$ O ist

und $L^1$ und $L^2$ $(C_1\text{-}C_{40})$Alkyl ist, dadurch der Metall-Ligand-Komplex von Formel (Id) ein Metall-Ligand-Komplex der Formel (Ie) ist:

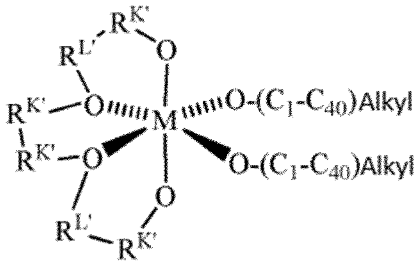

(Ie)

,

wobei jedes $R^{K'}\text{-}R^{L'}$ und der $R^{K'}\text{-}R^{K'}$ unabhängig ein $(C_2\text{-}C_{40})$Hydrocarbylen ist.

**7.** Katalysator gemäß Anspruch 1, wobei jedes von zwei von $R^1$ bis $R^4$ unabhängig $R^KOR^L$ ist und jedes der anderen zwei von $R^1$ bis $R^4$ unabhängig $R^KO^-$ ist; zwei $R^K$, ein $R^K$ und ein $R^L$ und ein weiteres $R^K$ und $R^L$ unabhängig mit den Sauerstoffatomen, an welche sie befestigt sind, zusammen genommen werden, dadurch der Metall-Ligand-Komplex von Formel (I) ein Metall-Ligand-Komplex der Formel (If) ist:

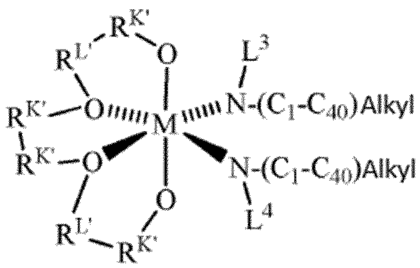

(If)

,

wobei jeder $R^{K'}\text{-}R^{L'}$ und der $R^{K'}\text{-}R^{K'}$ unabhängig ein $(C_2\text{-}C_{40})$Hydrocarbylen ist.

**8.** Katalysator gemäß einem der Ansprüche 5 bis 7, wobei jedes $R^{K'}\text{-}R^{L'}$ unabhängig $(C_6\text{-}C_{40})$Arylen ist und das $R^{K'}\text{-}R^{K'}$ $(C_2\text{-}C_{40})$Alkylen ist, das $(C_6\text{-}C_{40})$Arylen und $(C_2\text{-}C_{40})$Alkylen unabhängig unsubstituiert oder mit von 1 bis 5 der Substituenten $R^S$ substituiert ist.

**9.** Katalysator gemäß Anspruch 6, wobei jedes $R^{K'}\text{-}R^{L'}$ unabhängig ein mit von 3 bis 5 der Substituenten $R^S$ substituiertes $(C_{18})$Arylen ist, jedes $R^S$ unabhängig ein $(C_1\text{-}C_4)$Alkyl ist; und das $R^{K'}\text{-}R^{K'}$ ein unsubstituiertes $(C_2\text{-}C_6)$Alkylen ist, dadurch der Metall-Ligand-Komplex von Formel (Ie) ein Metall-Ligand-Komplex der Formel:

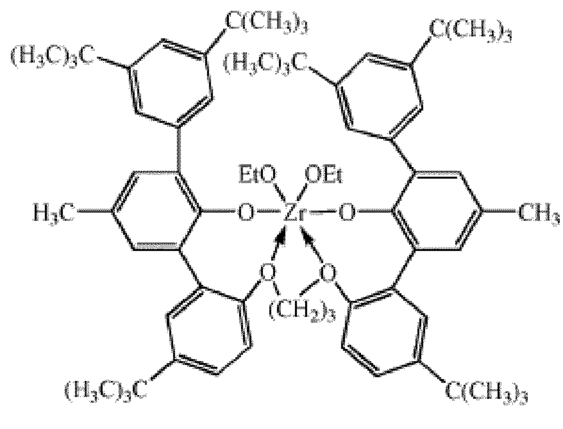

ist, wobei jedes Et Ethyl ist.

**10.** Katalysator gemäß einem der vorstehenden Ansprüche, wobei jedes Alkylaluminium unabhängig ein Monoalkylaluminiumdihydrid, Monoalkylaluminiumdihalogenid, Dialkylaluminiumhydrid, Dialkylaluminiumhalogenid oder ein

Trialkylaluminium ist, wobei jedes Alkyl unabhängig ein ($C_1$-$C_{40}$)Alkyl ist und jedes Halogenid unabhängig Fluorid, Chlorid, Bromid oder Iodid ist.

**11.** Katalysator gemäß einem der vorstehenden Ansprüche, wobei jede borhaltige ionische Verbindung unabhängig ein Kation und ein borhaltiges Anion beinhaltet; wobei das Kation ein Kation vom Ammoniumtyp oder ein Kohlenwasserstoffkation beinhaltet, wobei das Kation vom Ammoniumtyp ein Stickstoffkation beinhaltet, das ein (($C_1$-$C_{20}$)Hydrocarbyl)$_3$N(H)$^+$, ein (($C_1$-$C_{20}$)Hydrocarbyl)$_2$N(H)$_2^+$ oder ($C_1$-$C_{20}$)HydrocarbylN(H)$_3^+$ ist, wobei jedes ($C_1$-$C_{20}$)Hydrocarbyl unabhängig gleich oder unterschiedlich sein kann; und das borhaltige Anion ein tetrasubstituiertes Borat oder Boran beinhaltet.

**12.** Ein Verfahren zum Zubereiten des Katalysators gemäß einem der vorhergehenden Ansprüche, wobei das Verfahren die folgenden Schritte beinhaltet: In-Kontakt-Bringen des einen oder der mehreren Metall-Ligand-Komplexe von Formel (I) mit dem Alkylaluminium, um das Zwischenderivat davon zu produzieren; und anschließendes In-Kontakt-Bringen des Zwischenderivats mit der borhaltigen ionischen Verbindung, um den Katalysator von Anspruch 1 zu produzieren; wobei jeder Schritt des In-Kontakt-Bringens unabhängig unter Katalysatorzubereitungsbedingungen durchgeführt wird; das Verhältnis der Gesamtzahl an Molen des Alkylaluminiums zur Gesamtzahl an Molen des einem oder der mehreren Metall-Ligand-Komplexe von 1 : 1 bis 100 : 1 beträgt; und das Verhältnis der Gesamtzahl an Molen der borhaltigen ionischen Verbindung zur Gesamtzahl an Molen des einen oder der mehreren Metall-Ligand-Komplexe von 1 : 1 bis 5 : 1 beträgt.

**13.** Ein Verfahren zum Polymerisieren eines Olefins, wobei das Verfahren einen Schritt des In-Kontakt-Bringens von Inhaltsstoffen miteinander, beinhaltend ein Katalysatorsystem und ein Olefinmonomer unter Olefinpolymerisationsbedingungen, beinhaltet, um ein Polyolefin zu ergeben, wobei das Katalysatorsystem eine katalytische Menge des Katalysators gemäß Anspruch 1 beinhaltet und das Polyolefin eine Vielzahl von Wiederholungseinheiten beinhaltet, wobei jede Wiederholungseinheit unabhängig ein Rest des Olefinmonomers oder ein Derivat des Rests des Olefinmonomers ist.

**14.** Verfahren gemäß Anspruch 13, wobei das Katalysatorsystem ferner einen assoziierten Olefinpolymerisationskatalysator und ein Kettenübertragungsmittel beinhaltet, wobei das Verfahren ferner ein Olefincomonomer verwendet und das Polyolefin ein Poly(olefinmonomer-olefincomonomer)copolymer ist.

**15.** Verfahren gemäß Anspruch 14, wobei das Poly(olefinmonomer-olefincomonomer)copolymer ein Poly(olefinmonomer-olefincomonomer)blockcopolymer ist.

## Revendications

**1.** Un catalyseur préparé avec un ou plusieurs complexes métal-ligand, un alkylaluminium et un composé ionique contenant du bore, la préparation du catalyseur comprenant les étapes de mise en contact des un ou plusieurs complexes métal-ligand avec l'alkylaluminium pour produire un dérivé intermédiaire de ceux-ci ; et ensuite de mise en contact du dérivé intermédiaire avec le composé ionique contenant du bore pour produire le catalyseur ; chaque étape de mise en contact étant réalisée sous des conditions de préparation du catalyseur indépendantes ; le composé ionique contenant du bore comprenant un cation et un anion contenant du bore ; le rapport du nombre total de moles de l'alkylaluminium au nombre total de moles des un ou plusieurs complexes métal-ligand étant de 1/1 à 100/1 ; et le rapport du nombre total de moles du composé ionique contenant du bore au nombre total de moles des un ou plusieurs complexes métal-ligand étant de 1/1 à 5/1 ; et le complexe métal-ligand étant un complexe métal-ligand de formule (I) :

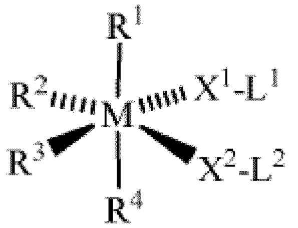

(I)

dans laquelle :

M est un titane, un zirconium, ou un hafnium ;
$X^1$ est O, N(H), ou N($L^3$) ;
$X^2$ est O, N(H), ou N($L^4$) ;
chaque élément parmi $L^1$ et $L^2$ est indépendamment un ($C_1$-$C_{40}$)hydrocarbyle ;
chaque élément parmi $L^3$ et $L^4$ est indépendamment un ($C_1$-$C_{40}$)hydrocarbyle ; ou $L^3$ est associé avec $L^1$ pour former un ($C_2$-$C_{40}$)alkylène, $L^4$ est associé avec $L^2$ pour former un ($C_2$-$C_{40}$)alkylène, $L^3$ est associé avec $L^4$ pour former un ($C_2$-$C_{40}$)alkylène, ou toute combinaison de ceux-ci ;
chaque élément parmi -$X^1$-$L^1$ et -$X^2$-$L^2$ étant un anion ayant un degré d'oxydation formel de -1 ;
deux éléments parmi $R^1$, $R^2$, $R^3$, et $R^4$ sont indépendamment des ligands neutres et les deux autres éléments parmi $R^1$, $R^2$, $R^3$, et $R^4$ sont indépendamment des ligands anioniques, chaque ligand neutre étant indépendamment $R^MNR^KR^L$, $R^KOR^L$, $R^KSR^L$, ou $R^MPR^KR^L$, chaque $R^K$, $R^L$ et $R^M$ étant indépendamment un hydrogène, un ($C_1$-$C_{40}$)hydrocarbyle, ou un ($C_1$-$C_{40}$)hétérohydrocarbyle, ou tout $R^K$ et tout $R^L$, ou tous deux $R^K$, le $R^K$ et le $R^L$ ou deux $R^K$ étant d'un ligand identique ou différent, sont indépendamment associés pour former un ($C_2$-$C_{40}$)hydrocarbylène ou un ($C_1$-$C_{40}$)hétérohydrocarbylène, et tout $R^K$ et tout $R^L$ restants sont tels que définis ci-dessus ; et chaque ligand anionique ayant indépendamment un degré d'oxydation formel de -1 et étant indépendamment $R^K$-P=$N^-$, $(R^K)_2C$=$N^-$, $R^KR^LN^-$, $R^KO^-$, $R^KS^-$, $R^KR^LP^-$, ou $R^MR^KR^LSi^-$, chaque $R^K$, $R^L$ et $R^M$ étant indépendamment tels que définis ci-dessus ; où $R^1$, $R^2$, $R^3$, et $R^4$ sont sélectionnés en fonction du degré d'oxydation formel de M tel que le complexe métal-ligand de formule (I) est, en agrégat, neutre ;
chacun des éléments susmentionnés ($C_2$-$C_{40}$)alkylène, ($C_1$-$C_{40}$)hydrocarbyle, ($C_1$-$C_{40}$)hétérohydrocarbyle, ($C_2$-$C_{40}$)hydrocarbylène, et ($C_1$-$C_{40}$)hétérohydrocarbylène sont indépendamment identiques ou différents et sont indépendamment substitués ou non substitués par un ou plusieurs substituants $R^s$ ; et
chaque $R^s$ est indépendamment halogéno, polyfluoro, perfluoro, ($C_1$-$C_{18}$)hydrocarbyle non substitué, $F_3C$-, $FCH_2O$-, $F_2HCO$-, $F_3CO$-, oxo (à savoir, =O), $R_3Si$-, RO-, RS-, RS(O)-, $RS(O)_2$-, $R_2P$-, $R_2N$-, $R_2C$=N-, NC-, RC(O)O-, ROC(O)-, RC(O)N(R)-, ou $R_2NC(O)$-, chaque R étant indépendamment un ($C_1$-$C_{18}$)hydrocarbyle non substitué.

**2.** Le catalyseur tel que dans la revendication 1, dans lequel dans le complexe métal-ligand de formule (I), chaque élément parmi $X^1$ et $X^2$ est O, le complexe métal-ligand de formule (I) étant ainsi un complexe métal-ligand de formule (Ia) :

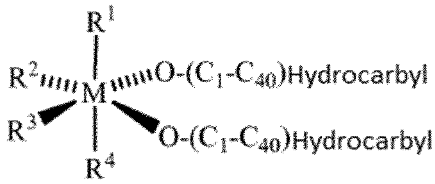

(Ia)

.

**3.** Le catalyseur tel que dans la revendication 1, dans lequel dans le complexe métal-ligand de formule (I), $X^1$ est N($L^3$) et $X^2$ est N($L^4$), le complexe métal-ligand de formule (I) étant ainsi un complexe métal-ligand de formule (Ic) :

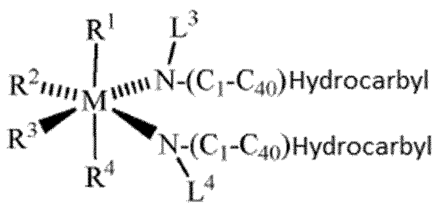

(Ic)

.

**4.** Le catalyseur tel que dans n'importe laquelle des revendications 1 à 3, dans lequel chacun de deux éléments parmi $R^1$ à $R^4$ sont indépendamment $R^KOR^L$ et chacun des deux autres éléments parmi $R^1$ à $R^4$ sont indépendamment $R^KO^-$.

**5.** Le catalyseur tel que dans la revendication 1, dans lequel chacun de deux éléments parmi $R^1$ à $R^4$ sont indépendamment $R^KOR^L$ et chacun des deux autres éléments parmi $R^1$ à $R^4$ sont indépendamment $R^KO^-$ ; deux $R^K$, un $R^K$ et un $R^L$, et un autre $R^K$ et $R^L$ étant indépendamment associés avec les atomes d'oxygène auxquels ils sont attachés, le complexe métal-ligand de formule (I) étant ainsi un complexe métal-ligand de formule (Id) :

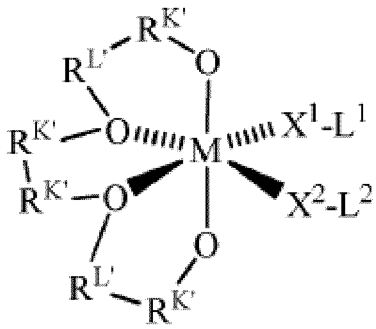

(Id)

,

chaque $R^{K'}$- $R^{L'}$ et le $R^{K'}$- $R^{K'}$ étant indépendamment un $(C_2\text{-}C_{40})$hydrocarbylène.

**6.** Le catalyseur tel que dans la revendication 5, dans lequel dans le complexe métal-ligand de formule (Id), chaque $X^1$ et $X^2$ est O et chaque $L^1$ et $L^2$ est un des $(C_1\text{-}C_{40})$alkyle, le complexe métal-ligand de formule (Id) étant ainsi un complexe métal-ligand de formule (le) :

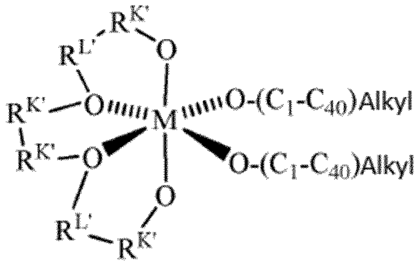

(Ie)

,

chaque $R^{K'}$-$R^{L'}$ et le $R^{K'}$-$R^{K'}$ étant indépendamment un $(C_2\text{-}C_{40})$hydrocarbylène.

**7.** Le catalyseur tel que dans la revendication 1, dans lequel chacun de deux éléments parmi $R^1$ à $R^4$ est indépendamment un $R^KOR^L$ et chacun des deux autres éléments parmi $R^1$ à $R^4$ est indépendamment $R^KO^-$ ; deux $R^K$, un $R^K$ et un $R^L$, et un autre $R^K$ et $R^L$ sont indépendamment associés avec les atomes d'oxygène auxquels ils sont attachés, le complexe métal-ligand de formule (I) étant ainsi un complexe métal-ligand de formule (If) :

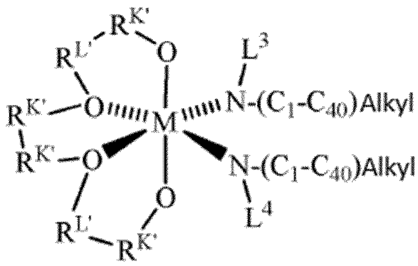

(If)

,

chaque $R^K$-$R^{L'}$ et le $R^{K'}$-$R^{K'}$ sont indépendamment un $(C_2\text{-}C_{40})$hydrocarbylène.

**8.** Le catalyseur tel que dans n'importe laquelle des revendications 5 à 7, chaque $R^{K'}$ - $R^{L'}$ étant indépendamment un $(C_6\text{-}C_{40})$arylène et le $R^{K'}$-$R^{K'}$ est un $(C_2\text{-}C_{40})$alkylène, le $(C_6\text{-}C_{40})$arylène et le $(C_2\text{-}C_{40})$alkylène étant indépendamment non substitués ou substitués avec de 1 à 5 substituants $R^s$.

**9.** Le catalyseur tel que dans la revendication 6, chaque $R^{K'}$-$R^{L'}$ étant indépendamment un $(C_{18})$arylène substitué avec de 3 à 5 substituants $R^s$, chaque $R^s$ étant indépendamment un $(C_1\text{-}C_4)$alkyle ; et le $R^K$-$R^{K'}$ étant un $(C_2\text{-}C_6)$alkylène non substitué, le complexe métal-ligand de formule (le) étant ainsi un complexe métal-ligand de formule :

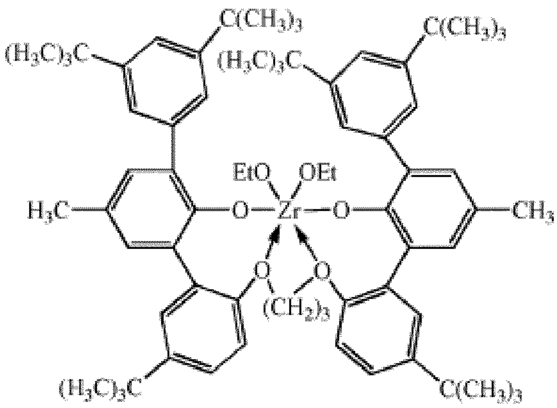

,

chaque Et étant un éthyle.

**10.** Le catalyseur tel que dans n'importe laquelle des revendications précédentes, chaque alkylaluminium étant indépendamment un dihydrure de monoalkylaluminium, un dihalogénure de monoalkylaluminium, un hydrure de dialkylaluminium, un halogénure de dialkylaluminium, or un trialkylaluminium, chaque alkyle étant indépendamment un ($C_1$-$C_{40}$)alkyle et chaque halogénure étant indépendamment un fluorure, chlorure, bromure, ou iodure.

**11.** Le catalyseur tel que dans n'importe laquelle des revendications précédentes, chaque composé ionique contenant du bore comprenant indépendamment un cation et un anion contenant du bore ; le cation comprenant un cation de type ammonium ou un cation hydrocarboné, le cation de type ammonium comprenant un cation azote qui est un (($C_1$-$C_{20}$)hydrocarbyl)$_3$N(H)$^+$, un (($C_1$-$C_{20}$)hydrocarbyl)$_2$N(H)$_2^+$, ou un ($C_1$-$C_{20}$)hydrocarbylN(H)$_3^+$, chaque ($C_1$-$C_{20}$)hydrocarbyl pouvant-être indépendamment identique ou différent ; et l'anion contenant du bore comprenant un borate ou un borane tétra-substitué.

**12.** Un procédé pour préparer le catalyseur tel que dans n'importe laquelle des revendications précédentes, le procédé comprenant les étapes de mise en contact des un ou plusieurs complexes métal-ligand de formule (I) avec l'alkylaluminium pour produire le dérivé intermédiaire de ceux-ci ; et ensuite de mise en contact du dérivé intermédiaire avec le composé ionique contenant du bore pour produire le catalyseur de la revendication 1 ; chaque étape de mise en contact étant indépendamment réalisée sous des conditions de préparation du catalyseur ; le rapport du nombre total de moles d'alkylaluminium au nombre total de moles des un ou plusieurs complexes métal-ligands étant de 1/1 à 100/1 ; et le rapport du nombre total de moles du composé ionique contenant du bore au nombre total de moles des un ou plusieurs complexes métal-ligand étant de 1/1 à 5/1.

**13.** Un procédé pour polymériser une oléfine, le procédé comprenant un étape de mise en contact ensemble d'ingrédients comprenant un système catalyseur et un monomère oléfine sous des conditions polymérisant l'oléfine pour donner une polyoléfine, le système catalyseur comprenant une quantité catalytique du catalyseur tel que dans la revendication 1 et la polyoléfine comprenant une pluralité d'unités de répétition, chaque unité de répétition étant indépendamment un résidu du monomère oléfine, ou un dérivé du résidu du monomère oléfine.

**14.** Le procédé tel que dans la revendication 13, le système catalyseur comprenant en outre un catalyseur de polymérisation d'oléfine associé et un agent navette de chaîne (chain shuttling agent) le procédé employant en outre un comonomère oléfine, et la polyoléfine étant un copolymère poly(monomère oléfine-comonomère oléfine).

**15.** Le procédé tel que dans la revendication 14, le copolymère poly(monomère oléfine-comonomère oléfine) étant un copolymère à blocs poly(monomère oléfine-comonomère oléfine).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5536797 A
- US 5670680 A
- US 20070111883 A1
- WO 2007136494 A2
- US 20040010103 A
- WO 2009097560 A
- US 7355089 B
- US 20060199930 A
- WO 2005090425 A
- WO 2005090426 A
- WO 2005090427 A
- US 20070167578 A1
- WO 2008027283 A
- US 12377034 B
- US 5064802 A
- US 5153157 A
- US 5296433 A
- US 5321106 A
- US 5350723 A
- US 5425872 A
- US 5470993 A
- US 5625087 A
- US 5721185 A
- US 5783512 A
- US 5866704 A
- US 5883204 A
- US 5919983 A
- US 6015868 A
- US 6034022 A
- US 6103657 A
- US 6150297 A
- US 6268444 B
- US 6320005 B
- US 6515155 B
- US 6555634 B
- US 6696379 B
- US 7163907 B
- WO 0202577 A
- WO 0292610 A
- WO 0238628 A
- WO 0340195 A
- WO 0378480 A
- WO 0378483 A
- WO 2009012215 A2
- US 20030004286 A
- US 040220050 B
- US 20060199930 A1
- US 20080311812 A1
- US 7355089 B2
- US 0204017 A
- US 10429024 B
- WO 0424740 A
- WO 03401952003 A
- WO 2003051935 A
- US 2003004286 A
- US 6515155 B1
- WO 2005073283 A1
- WO 2005090425 A1
- WO 2005090426 A1
- WO 2005090427 A2
- WO 2006101595 A1
- WO 2007035485 A1
- WO 2007035492 A1
- WO 2007035493 A2
- US 20040010103 A1


### Non-patent literature cited in the description


- **ARJAN VAN DER LINDEN et al.** Polymerization of α-Olefins and Butadiene and Catalytic Cyclotrimerization of 1-Alkynes by a New Class of Group IV Catalysts. Control of Molecular Weight and Polymer Microstructure via Ligand Tuning in Sterically Hindered Chelating Phenoxide Titanium and Zirconium Species. *Journal of the American Chemical Society,* 1995, vol. 117 (11), 3008-3021
- **MARQUET et al.** *ORGANOMETALLICS,* 01 January 2009, vol. 28, 606-620
- Makromolekulare Chemie, Rapid Communications. Huthig und Wepf Verlag, 01 January 1993, vol. 14, 109-114
- **RANDALL, J.C.** *JMS-Rev. Macromol. Chem. Phys.,* 1989, vol. C29, 201-317
- **B. G. KYLE.** Chemical and Process Thermodynamics. Prentice-Hall, 1999
- *Chemical Engineering Science,* vol. 1972, 1197-1203
- *CHEMICAL ABSTRACTS,* 2198-66-5
- *CHEMICAL ABSTRACTS,* 22385-77-9
- *CHEMICAL ABSTRACTS,* 2432-14-6

- *CHEMICAL ABSTRACTS,* 98-54-4
- *CHEMICAL ABSTRACTS,* 5469-66-9
- *CHEMICAL ABSTRACTS,* 109-64-8